# EUROPEAN PATENT SPECIFICATION

(11) **EP 2 802 221 B1**
(45) Date of publication and mention of the grant of the patent: **11.03.2020**
(21) Application number: 13736027.7
(22) Date of filing: 11.01.2013
(51) Int. Cl.: A23L 2/39, A23L 2/52, A23B 7/022, A23P 10/40, A23L 19/00

(54) **DEHYDRATED PLANT-DERIVED PRODUCTS AND METHODS FOR MAKING THE SAME**
AUS DEHYDRATISIERTEN PFLANZEN GEWONNENE PRODUKTE UND HERSTELLUNGSVERFAHREN DAFÜR
PRODUITS DÉSHYDRATÉS DÉRIVÉS DE PLANTES ET LEURS PROCÉDÉS DE FABRICATION

(30) Priority: 11.01.2012 US 201261585502 P
(43) Date of publication of application: 19.11.2014
(73) Proprietor: Columbia Phytotechnology, LLC, The Dalles, OR 97058 (US)
(72) Inventor: SAVARESE, Mark, The Dalles, OR 97058 (US); RINGER, Kerry, Bend, OR 97701 (US)
(74) Representative: HGF Limited
(86) International application number: PCT/US2013/021293
(87) International publication number: WO 2013/106754

(56) References cited:
- WO-A1-92/10940
- WO-A1-2008/006388
- DD-A1- 216 618
- GB-A- 2 148 089
- GB-A- 2 206 273
- JP-A- 2001 017 114
- US-A- 2 816 840
- US-A- 4 113 865
- US-A- 4 948 609
- US-A1- 2007 237 870
- US-A1- 2010 196 532
- US-B1- 6 231 866

## Description

### FIELD

This disclosure concerns powders including dried plant-derived products, and methods of making the same.

### BACKGROUND

A major problem in using dried powders with foods and beverages is the tendency of the product to clump over time due the thermoplastic nature of fruits and vegetables. The "plastic" nature of the product results in the fine particles bonding back together to form clumps or even bricks out of the powder. Once the product is clumped and no longer powder it becomes difficult to process or use the powder at a retail level. For example the powders can be mixed with water and other ingredients at a bottling plant or at a direct retail level the powders can be formulated into a stick pack, single-serving pack or multiple-serving jar or other single- or multi-serving media. However, if the powder is clumped or even bricked, these uses become difficult or impossible.

Beverage and food formulations often contain the following ingredients: fruit or vegetables, sugar or corn syrup, ascorbic acid, natural or artificial flavor, and artificial or natural color. Sugar or corn syrup is added to balance the tart flavors of the fruits or vegetables. The flavors and colors are added because the fruit or vegetable content of the formulations is extremely low in the products. This is due to the high cost of handling liquid or fresh fruits and vegetables. Powderizing the fresh fruit reduces the cost of the fruit or vegetable raw materials by eliminating the expensive transport and refrigeration costs of high water content fruits, vegetables, purees and juices. Powdered beverages (sold to the consumer to be rehydrated in water), often contain little or no fruit due to the thermoplastic clumping of the fruit rendering the product unusable.

US 4113865 describes fruit juice-sugar granules. Furthermore, GB 2148089 and DD 216618 describe fruit-based products. Finally, US 2816840 describes a process for making full-flavored powdered fruit juice.

### SUMMARY

In one aspect, the invention provides a method for making a food powder composition consisting essentially of a plant-derived product, exogenous sucrose and/or trehalose, and ≤ 2% (w/w) water, the method comprising:
providing at least one plant-derived product in the form of a puree, a juice, a nectar, or any combination thereof;
adding an amount of exogenous sucrose and/or trehalose to the plant-derived product, and blending the plant-derived product and the exogenous sucrose and/or trehalose to produce a homogenous mixture, wherein the amount of exogenous sucrose and/or trehalose is sufficient to provide a dried composition comprising the plant-derived product and 10% to 60% by weight of the exogenous sucrose and/or trehalose; depositing a layer of the mixture onto a support that moves the mixture through a plurality of heating zones of a drying apparatus wherein heat is supplied by dry radiant heat in the form of infrared energy below the support, thereby heating the mixture to a temperature of 65°C to 90°C for a period of time sufficient to reduce a water content of the mixture;
cooling the mixture to room temperature over a time period of 2 to 10 minutes; thereby producing a dried composition comprising ≤ 2% (w/w) water and retaining at least 90% of nutrients found in the plant-derived product before drying; and comminuting the dried composition to produce particles having an average largest dimension of ≤ 7 mm.

In one embodiment according to the invention, the method further comprises:
a) pre-heating the mixture to a temperature sufficient to dissolve the sucrose and/or trehalose in the mixture before heating the mixture to reduce the water content; or
b) dissolving the exogenous sucrose and/or trehalose in water before adding the exogenous sucrose and/or trehalose to the plant-derived product.

In one embodiment according to the invention, the plant-derived product comprises a puree, the method further comprising reducing an average particle size in the puree to less than 50 µm before heating the mixture to reduce the water content.

In one embodiment according to the invention, the at least one plant-derived product comprises ≤ 6% (w/w) endogenous sucrose and/or trehalose.

In one embodiment according to the invention, providing at least one plant-derived product comprises providing a blend comprising at least one plant-derived puree and at least one plant- derived juice.

In one embodiment according to the invention, the dry radiant heat is provided by heat sources below the support, the method further comprising:
adjusting the vertical positions of the heat sources and/or the temperature of the heat sources to maintain a predetermined temperature profile for the mixture and a predetermined wavelength of radiant energy in each heating zone.

The method may further comprise:
measuring the temperature of the mixture;
determining the wavelength of the radiant energy; and
adjusting the vertical positions of the heat sources and/or the temperature of the heat sources based on the measured temperature and the determined wavelength so as to maintain the predetermined temperature profile for the mixture and a predetermined wavelength of radiant energy in each heating zone.
The predetermined wavelength of radiant energy may be 3 microns or 6.2 microns.

In one embodiment according to the invention, the amount of exogenous sucrose and/or trehalose is sufficient to provide a dried composition comprising the plant-derived product and 25% to 50% by weight of the exogenous sucrose and/or trehalose.

In another aspect of the invention, the invention provides a food powder composition obtained by the process of the invention, the food powder composition consisting essentially of:
(i) 40-90% (w/w) plant-derived product comprising solids obtained from a fruit puree, a vegetable puree, a fruit juice, a vegetable juice, a nectar-derived product, or any combination thereof;
(ii) 10-60% (w/w) exogenous trehalose, wherein the plant-derived product and exogenous trehalose form a dispersion; and
(iii) ≤ 2% (w/w) water, wherein the food powder composition retains at least 90% of nutrients found in the plant-derived product before drying, and wherein the powder composition comprises a plurality of particles having an average largest dimension of ≤ 7 mm.

In one embodiment according to the invention, the plant-derived product further comprises natural color and/or natural flavor derived from a fruit, a vegetable, or a combination thereof.

In one embodiment according to the invention, the fruit puree, vegetable puree, fruit juice, vegetable juice, nectar, or combination thereof comprises ≤ 6% (w/w) endogenous trehalose.

In one embodiment according to the invention, the food powder composition consists essentially of:
the plant-derived product;
25-50% (w/w) of the exogenous trehalose; and
≤ 2% (w/w) water.

Compositions disclosed herein include (a) a dispersion comprising 40-90% (w/w) plant-derived product and 10-60% (w/w) exogenous disaccharide, and (b) water, wherein the composition has a water content ≤ 5% (w/w), such as ≤ 2% (w/w) water. Suitable plant-derived products include solids of fruits and/or vegetables (e.g., solids derived from fruit purees, fruit juices, vegetable purees, vegetable juices), and nectar- or sap-derived products such as agave nectar, maple syrup, and honey. The plant-derived product may further include natural color and/or natural flavor derived from a fruit, a vegetable, or a combination thereof. In some embodiments, the plant-derived product has thermoplastic characteristics and/or a glass transition temperature that is less than 60 °C. In one instance, the disclosed composition consists essentially of the plant-derived product, exogenous disaccharide, and water, wherein the composition has a water content ≤ 5% (w/w).

The exogenous disaccharide is sucrose, trehalose, or a combination thereof. In certain instances of the disclosure, the composition is made from a fruit, vegetable, nectar-derived product, or sap-derived product that includes ≤ 6% (w/w) endogenous endogenous disaccharide. In some embodiments, the composition has a shelf life of at least one month when stored at 20-25 °C.

The composition is a powder comprising a plurality of particles. The particles have an average largest dimension of ≤ 7 mm, such as 0.1-2 mm. The particles may have a smooth outer surface and/or a flattened morphology. In certain embodiments, each particle in the plurality of particles has a substantially similar chemical composition.

In some instances, the disclosed composition further comprises ≤5% (w/) flowability agent, such as silicon dioxide, tricalcium phosphate, or a combination thereof. In one instance, the disclosed composition consists essentially of the plant-derived product, exogenous disaccharide, flowability agent, and water.

Also disclosed are products including a packaging material and an amount of a powder comprising a plurality of particles, each particle including 40-90% (w/w) plant-derived product, wherein the plant-derived product comprises solids (e.g., derived from a puree and/or juice) of a fruit, a vegetable, or a combination thereof, 10-60% (w/w) exogenous disaccharide, and water, wherein the powder has a water content ≤ 5% (w/w), such as ≤ 2% (w/w). The plant-derived product may further include natural flavor and/or natural color. The powder may further include ≤ 5% (w/w) flowability agent. In some embodiments, the amount of the powder is sufficient to provide at least one serving of fruit, vegetable, fruit juice, vegetable juice, or combination thereof. When the powder particles include at least one fruit, the amount of powder may be 8-90 g. When the powder particles include at least one vegetable, the amount of powder may be 4-90 g. In some embodiments, the amount of the powder that is sufficient to provide one serving has a nutrient content in the range of 90-100% of a nutrient content of one serving of a corresponding fresh fruit, fresh vegetable, or combination thereof. For example, a serving size of a powder wherein the fruit is apple has 90-100% of the nutrients found in a serving size of a fresh apple. In some embodiments, the product has a shelf life of at least one month when stored at 20-25 °C.

Also disclosed is a composition consisting essentially of 95-99.9% plant-derived product, wherein the plant-derived product comprises (i) solids of at least one fruit puree or vegetable puree, (ii) solids of at least one fruit juice or vegetable juice, and optionally (iii) natural color and/or natural flavor obtained from a fruit, a vegetable, or a combination thereof, and 0.1-5% (w/w) water, wherein the composition comprises a plurality of particles having an average largest dimension of ≤ 7 mm, such as 0.1-2 mm. In some embodiments, the particles have a flattened morphology and/or a smooth outer surface. In certain embodiments, the plant-derived product includes solids obtained from a blend of 50-90% (w/w) puree and 10-50% (w/w) juice, such as 50-80% (w/w) puree and 20-50% (w/w) juice. In one instance, a disclosed composition consists essentially of 90-99.9% plant-derived product, wherein the plant-derived product is (i) solids of at least one fruit puree or vegetable puree, (ii) solids of at least one fruit juice or vegetable juice, and optionally (iii) natural color and/or natural flavor obtained from a fruit, a vegetable, or a combination thereof; ≤ 5% (w/w) flowability agent; and 0.1-5% (w/w) water, wherein the composition comprises a plurality of particles having an average largest dimension of ≤ 7 mm.

Some instances of a disclosed method for making the disclosed compositions and powders include (a) providing a plant-derived product in the form of a puree, a juice, a syrup, a nectar, or any combination thereof; (b) adding an amount of an exogenous disaccharide (*e.g*., sucrose, trehalose, or a combination thereof) to the puree to produce a mixture, wherein the amount of exogenous disaccharide is in the range of 10% to 60% by weight of solids in the plant-derived product; (c) heating the mixture for a period of time sufficient to reduce a water content of the mixture; and (d) cooling the mixture, thereby producing a dried composition comprising ≤ 5% (w/w) water. In certain instances, ≤ 5% (w/w) of a flowability agent is added to the dried composition. The method may further include comminuting the dried mixture to produce particles having an average largest dimension ≤ 7 mm. In some embodiments, the comminuted particles have a smooth outer surface and/or a flattened morphology. In certain embodiments, the plant-derived product comprises a puree, and the method further includes reducing an average particle size in the puree to less than 10 µm before heating the mixture.

The plant-derived product and disaccharide is blended to produce a homogeneous mixture before heating the mixture. In another embodiment, the mixture is pre-heated to a temperature sufficient to dissolve the disaccharide before heating the mixture to reduce the water content. In yet another embodiment, the mixture may be both blended and pre-heated. In one embodiment, the exogenous disaccharide is dissolved in water before adding it to the plant-derived product.

In some instances, a method is disclosed for producing a dried composition comprising ≤ 5% (w/w) water, wherein the method includes providing a blend comprising at least one plant-derived puree and at least one plant-derived juice, heating the blend for a period of time sufficient to reduce the water content of the blend, and cooling the blend to form a dried composition. The blend may include 50-90% (w/w) puree and 10-50% (w/w) juice. In one instance, the disclosed blend consists essentially of at least one plant-derived puree and at least one plant-derived juice. In another instance, the disclosed method further includes adding a quantity of an exogenous disaccharide to the blend before heating the blend. In one instance, a flowability agent (≤ 5% (w/w)) is added to the dried composition. The dried composition may be comminuted to produce particles having an average largest dimension ≤ 7 mm.

The foregoing and other objects, features, and advantages of the invention will become more apparent from the following detailed description, which proceeds with reference to the accompanying figures.

### BRIEF DESCRIPTION OF THE DRAWINGS

FIG. 1 is a schematic diagram showing exemplary particles of one embodiment of a powder as disclosed herein.
FIG. 2 is a schematic diagram showing exemplary particles produced by freeze-drying or spray-drying.
FIG. 3 is a side elevation diagram of a drying apparatus.
FIG. 4 is a schematic diagram showing one possible configuration of communication links between the various components of the apparatus depicted in FIG. 3.
FIG. 5 is a side elevation diagram of a drying apparatus.
FIG. 6 is an enlarged, schematic side elevation diagram of one of the movable heater supports of the apparatus depicted in FIG. 5.
FIG. 7 is a flowchart illustrating a method for operating the drying apparatus shown in FIG. 5.
FIG. 8 is a perspective, schematic view of a movable heater support.
FIG. 9 is a line graph showing the relationship between the operating temperature of a quartz heating element and the peak wavelength of infrared radiation emitted by the heating element.
FIG. 10 is a chart showing the absorption of electromagnetic radiation by water across a range of wavelengths.
FIG. 11 is a schematic illustration of a drying apparatus.

### DETAILED DESCRIPTION

This disclosure concerns dried compositions made from plant-derived products, wherein the compositions have significantly enhanced stability against clumping. Methods for making the compositions and products including the compositions also are disclosed. The
composition is a powder. Suitable plant-derived products include purees and/or juices of fruits and/or vegetables, and nectar- or sap-derived products such as agave nectar, maple syrup, and honey. Some fruits, vegetables, nectars, and syrups are thermoplastic in nature and, when dried, may form powders that are sticky and have a tendency to clump over time as the powder particles stick, or bond, together. The compositions of the invention include exogenous trehalose and/or sucrose, which is added to a plant-derived product prior to drying the product.

### I. Definitions

The following explanations of terms and abbreviations are provided to better describe the present disclosure and to guide those of ordinary skill in the art in the practice of the present disclosure. As used herein, "comprising" means "including".

Unless explained otherwise, all technical and scientific terms used herein have the same meaning as commonly understood to one of ordinary skill in the art to which this disclosure belongs. Although methods and materials similar or equivalent to those described herein can be used in the practice or testing of the present disclosure, suitable methods and materials are described below. The materials, methods, and examples are illustrative only and not intended to be limiting. Other features of the disclosure are apparent from the following detailed description and the claims.

**Disaccharide:** A carbohydrate including two monosaccharides linked by a glycosidic bond. Monosaccharides are simple sugars having, with few exceptions, the basic chemical formula Cₓ(H₂O)_{y}, where x and y are integers. Typically, y = x or y = x-1, and x is at least 3. Many monosaccharides are pentoses (x = 5) or hexoses (x = 6). Examples of monosaccharides include arabinose, fructose, galactose, glucose, ribose, and xylose, among others. Common disaccharides include cellobiose, lactose, lactulose, maltose, sucrose, trehalose, and xylobiose.

**Dispersion:** A system in which particles of one component are dispersed in a continuous phase of a different component. A **molecular dispersion** is a system in which at least one component is homogeneously or substantially homogeneously dispersed on a molecular level throughout another component.

**Exogenous:** Having an external origin. As used herein, the term "exogenous disaccharide" refers to a disaccharide that has been added to a composition, in contrast to an endogenous disaccharide, which occurs naturally in a fruit or vegetable.

**Flowability agent:** As used herein, the term "flowability agent" refers to a compound added to the dried product (*e.g*., before, during, or after comminution) to aid in producing a flowable powder. Exemplary flowability agents include, but are not limited to, silicon dioxide and tricalcium phosphate.

**Glass transition temperature, Tg:** The temperature at which an amorphous solid becomes brittle or strong on cooling, or soft or pliable on heating. Tg can be determined, for example, by differential scanning calorimetry (DSC). DSC measures the difference in the amount of heat required to raise the temperature of a sample and a reference as a function of temperature. During a phase transition, such as a change from an amorphous state to a crystalline state, the amount of heat required changes.

**Hygroscopic:** A term describing a substance that exhibits the property of absorbing or adsorbing moisture from the surrounding environment.

**Nectar:** A sugar-rich liquid produced by plants in glands called nectaries. Nectaries often are found within flowers.

A **powder** is a composition comprising dispersed solid particles that are relatively free flowing from one another. Powder particles are small, typically having an average particle size with a largest dimension of, *e.g*., 0.05-7 mm.

**Serving size:** There are differing definitions of fruit and vegetable serving sizes. For example, the Code of Federal Regulations, Title 21, Chapter I, Subchapter B, Part 101, Subpart A defines serving sizes for fresh or frozen fruits and vegetables. For many fruits, a serving size is defined as 140 g. A few fruits (cranberries, lemons, limes) have a serving size of 55 g. Many fresh or frozen vegetables have a serving size of 85 g. A serving size of fruit or vegetable juice is 240 mL. Fruits and vegetables typically are 74-96% (w/w) water, as shown in Table 1 below.

**Table 1**

| **Fruit** | **% (w/w) Water** | **Vegetable** | **% (w/w) Water** |
|---|---|---|---|
| Apple | 84 | Broccoli | 91 |
| Apricot | 86 | Cabbage (green) | 93 |
| Banana | 74 | Cabbage (red) | 92 |
| Blueberries | 85 | Carrots | 87 |
| Cantaloupe | 90 | Cauliflower | 92 |
| Cherries | 81 | Celery | 95 |
| Cranberries | 87 | Cucumber | 96 |
| Grapes | 81 | Eggplant | 92 |
| Grapefruit | 91 | Lettuce (iceberg) | 96 |
| Orange | 87 | Peas (green) | 79 |
| Peach | 88 | Peppers (sweet) | 92 |
| Pear | 84 | Potato (white) | 79 |
| Pineapple | 87 | Radish | 95 |
| Plum | 85 | Spinach | 92 |
| Raspberries | 87 | Zucchini | 95 |
| Strawberries | 92 | Tomato (red) | 94 |
| Watermelon | 92 | Tomato (green) | 93 |

| | | | |
|---|---|---|---|
| Source: University of Kentucky College of Agriculture, Cooperative Extension Service, December 1997. | | | |

In some embodiments, a serving size of a fruit or vegetable is defined as 1 cup of the fruit or vegetable. The U.S. Department of Agriculture "Choose My Plate Requirements" recommends that adults consume 480-720ml (2-3 cups) of fruits and vegetables per day. Table 2 provides representative weights of 240ml (1 cup) of a fruit or vegetable, the percent solids in the fruit or vegetable, and the grams of dried solid equivalent to 240ml (1 cup) of fresh fruit or vegetable.

**Table 2**

| **FRUIT** | **WEIGHT OF 240ML (1 CUP) FRESH FRUIT (GRAMS)** | **PERCENT SOLIDS*** | **GRAMS OF POWDER EQUIVALENT TO 240ML (1 CUP) FRESH (GRAMS)** |
|---|---|---|---|
| Acai | 140 | 12.1 | 17 |
| Acerola | 98 | 8.6 | 8.4 |
| Apple With Skin | 118 | 12.9 | 15.2 |
| Apricot | 86 | 27.0 | 23.2 |
| Banana | 114 | 24.2 | 27.6 |
| Blackberry | 144 | 11.9 | 17.2 |
| Black Currant | 112 | 18.0 | 20.2 |
| Blueberry | 146 | 12.6 | 17.8 |
| Cherry | 154 | 17.5 | 27 |
| Cranberry | 100 | 13.0 | 13 |
| Grape-Concord | 92 | 18.9 | 17.4 |
| Grapefruit | 230 | 9.0 | 20.8 |
| Kiwi | 186 | 17.0 | 31.6 |
| Lemon | 212 | 10.8 | 22.8 |
| Lime | 134 | 11.9 | 16 |
| Mango | 165 | 16.2 | 26.8 |
| Orange | 165 | 13.0 | 21.4 |
| Peach | 154 | 11.0 | 17 |
| Pear | 162 | 14.0 | 22.6 |
| Pineapple | 165 | 13.0 | 21.4 |
| Pomegranate | 174 | 17.0 | 29.6 |
| Prickly Pear | 149 | 11.9 | 17.8 |
| Raspberry | 130 | 13.1 | 17 |
| Strawberry | 144 | 8.1 | 11.6 |
| Watermelon | 152 | 8.0 | 12.2 |

| **VEGETABLE** | **WEIGHT OF 240ML (1 CUP) FRESH VEGETABLE (GRAMS)** | **PERCENT SOLIDS*** | **GRAMS OF POWDER EQUIVALENT TO 240ML (1 CUP) FRESH (GRAMS)** |
|---|---|---|---|
| Asparagus | 134 | 6.7 | 9 |
| Beet | 136 | 12.5 | 17 |
| Broccoli | 88 | 9.1 | 8 |
| Butternut Squash | 140 | 13.6 | 19 |
| Carrot | 128 | 11.7 | 15 |
| Chard | 36 | 8.3 | 3 |
| Chinese Cabbage | 70 | 4.3 | 3 |
| Eggplant | 82 | 7.3 | 6 |
| Kale | 67 | 15.5 | 10.4 |
| Peas | 145 | 21.4 | 31 |
| Pumpkin | 116 | 8.6 | 10 |
| Spinach | 30 | 8.7 | 2.6 |
| Sweet Potato | 133 | 15.2 | 20.2 |
| Tomato | 180 | 5.6 | 10 |
| Zucchini | 124 | 6.5 | 8 |

| | | | |
|---|---|---|---|
| *Sources: United States Department of Agriculture Nutrient Database, determination by applicant | | | |

**Shelf life:** As used herein, the term "shelf life" refers to the length of time that a powder remains flowable with substantially separate particles. Over time, particles of some powders may clump together, making it difficult or impossible to pour the powder and/or making it difficult to dissolve the powder into a liquid such as water. As used herein, the term "shelf life" also refers to the length of time that a powder can be stored without microbial growth or enzymatic degradation.

**Syrup:** A viscous liquid comprising primarily sugar and water. Syrups can be made by reducing naturally sweet juices such as cane juice or maple sap.

**Thermoplastic:** A term describing a substance that softens when exposed to heat and returns to a more rigid condition when cooled to room temperature. Thermoplastic substances are elastic and flexible above their glass transition temperature and are rigid at lower temperatures. Substances with thermoplastic characteristics may form powders that have a tendency to be sticky and clump together over time.

### II. Compositions

Disclosed compositions include a plant-derived product and ≤ 5% (w/w) water. The composition may include a solid dispersion of plant-derived product and an exogenous disaccharide. Some or all of the water may be included in the solid dispersion. In certain examples, the composition is a molecular dispersion of the plant-derived product and the exogenous disaccharide. The plant-derived products include solids of fruits, vegetables, nectars, nectar- or sap-derived products such as syrups or any combination thereof. Fruit and vegetable solids can be obtained from fruit/vegetable purees and/or juices. The plant-derived products may further include natural color and/or natural flavor. The term "natural" as used herein, means derived from a fruit or vegetable. In certain examples, the natural color and/or flavor is obtained from the same fruit(s) and/or vegetable(s) from which the puree and/or juice is obtained. In other examples, the natural color and/or flavor may be obtained from a different fruit and/or vegetable than the puree and/or juice. Suitable fruits, vegetables, nectars, and nectar- or sap-derived products include, but are not limited to, those listed in Tables 1 and 2, agave syrup, maple syrup, and combinations thereof.

The disclosed compositions may comprise 40-99.9% (w/w) plant-derived product and 0-60% (w/w) exogenous disaccharide. The compositions may include 10-60%, 20-50%, 25-50%, 30-50%, 25-40%, or 25-35% (w/w) exogenous disaccharide. The claimed composition comprises 40-90% (w/w) plant-derived product and 10-60% (w/w) exogenous trehalose. The claimed compositions further include water, and have a water content ≤ 2% (w/w), ≤ 1.5% (w/w), or ≤ 1% (w/w). Disclosed compositions may comprise 40-99.9% (w/w) plant-derived product, 0-60% (w/w) exogenous disaccharide, and ≤5% (w/w) water, such as ≤2% (w/w) water. In certain instances, the disclosed compositions may further comprise a small amount (e.g., less than 5% (w/w), such as 2% (w/w) of a flowability agent to further enhance product flowability. Exemplary flowability agents include, but are not limited to, silicon dioxide or tricalcium phosphate.

In one instance, the disclosed composition comprises 40-90% (w/w) plant-derived product, 10-60% (w/w) exogenous disaccharide, and ≤ 5% (w/w) water. In another instance, the disclosed composition comprises 50-80% (w/w) plant-derived product, 20-50% (w/w) exogenous disaccharide, and ≤ 5% (w/w) water. In yet another instance, the disclosed composition comprises 40-90% (w/w) plant-derived product, 10-60% (w/w) exogenous disaccharide, ≤ 5% (w/w) water, and ≤ 5% (w/w) flowability agent.

In one instance, the disclosed composition consists essentially of 40-90% (w/w) plant-derived product, 10-60% (w/w) exogenous disaccharide, and ≤ 5% (w/w) water. In another instance, the disclosed composition consists essentially of 45-80% (w/w) plant-derived product, 15-50% (w/w) exogenous disaccharide, ≤ 5% (w/w) water, and ≤ 5% (w/w) of a flowability agent. In still another instance, the disclosed composition consists essentially of 48-80% (w/w) plant-derived product, 18-50% (w/w) exogenous disaccharide, ≤ 5% (w/w) water, and ≤ 2% (w/w) of a flowability agent.

In one instance, the disclosed composition consists essentially of 95-99.9% plant-derived product and 0.1-5% (w/w) water. In another instance, the disclosed composition consists essentially of 90-99.9% plant-derived product, 0.1-5% (w/w) water, and ≤ 5% (w/w) of a flowability agent. In yet another instance, the disclosed composition consists essentially of 93-99.9% plant-derived product, 0.1-5% (w/w) water, and ≤ 2% (w/w) of a flowability agent.

In contrast to the disclosed compositions, other commercially available powders often contain large amounts (*e.g*., more than 10% (w/w) of additional ingredients, such as drying agents that are added to facilitate drying of the plant-derived product. Drying agents include, but are not limited to, aluminum silicate, calcium aluminum silicate, calcium carbonate, calcium silicate, calcium stearate, cellulose, ferric ammonium citrate, magnesium carbonate, magnesium oxide, magnesium silicate, magnesium stearate, maltodextrin, and sodium aluminosilicate. For example, other commercial powders may include 25-50% (w/w) maltodextrin.

The composition of the invention is in the form of a powder. Disclosed are compositions which also can be provided in other solid forms such as in the form of sheets, chunks, flakes, granules, and other solid forms that are larger than powderized particles. Powders are desirable for several reasons. For example, powders can be sold at the retail level as drink mixes that can be dissolved in water. Powders also are advantageous because they can easily be mixed with other ingredients.

In certain embodiments according to the invention, the exogenous disaccharide provides the powder with significantly enhanced stability against clumping (*e.g*., clumping during storage) and, hence, extended shelf life compared to corresponding dried powders that do not include an exogenous disaccharide. In certain embodiments according to the invention, the powder also is less hygroscopic than dried powders that do not include an exogenous disaccharide. The exogenous disaccharide may provide the powder with an increased glass transition temperature, Tg, compared to dried powders without an exogenous disaccharide. Suitable exogenous disaccharides are sucrose, trehalose, and combinations thereof.

Because fruits, vegetables, nectars, and sap-derived products may naturally include disaccharides, particularly sucrose, embodiments of the powder claimed herein may have a combined disaccharide content (*i.e*., natural disaccharide and exogenous disaccharide) that is higher than the exogenous disaccharide, *e.g*., an exogenous disaccharide content of 10-60% (w/w). For example, the combined disaccharide content may be 10-80%, depending upon the natural disaccharide content of the plant-derived product.

In some embodiments according to the invention, the plant-derived product used to make the composition or powder has a natural, or endogenous, disaccharide content ≤ 6% (w/w). In certain embodiments, the endogenous disaccharide content is ≤ 5% (w/w), ≤ 3% (w/w), or even ≤ 1% (w/w). For example, carrots have a natural sucrose content of 3.6% (w/w), apples have a sucrose content of about 2.1% (w/w), pears have a sucrose content of 0.8% (w/w), and grapes have a sucrose content of 0.2% (w/w) (source: U.S. Department of Agriculture National Nutrient Database).

The powders claimed herein are homogeneous or substantially homogeneous. The powders may comprise solid particles that are free flowing from one another.

Individual powder particles comprise plant-derived solids and, in some embodiments, a disaccharide. The particles also include ≤ 2% (w/w) water, such as ≤ 1.5% (w/w) water. Individual particles may be amorphous, crystalline, or may include both amorphous and crystalline domains. In some embodiments according to the invention, the chemical composition of each particle in a powder is substantially similar to the chemical composition of each of the other particles in the powder. Embodiments of the powders according to the invention are not a mixture of individual particles of plant-derived solids and individual particles of disaccharide.

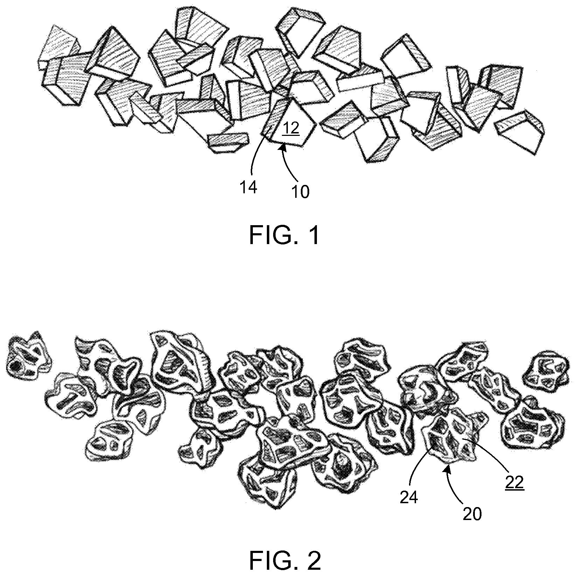

The powder particles may appear smooth and nonporous under microscopic analysis. The powder particles also may have a flattened morphology. Thus, in some embodiments according to the invention, the particles appear as smooth, flattened, nonporous particles when viewed with a microscope. FIG. 1 is a schematic drawing showing exemplary particles 10 of the disclosed powders. Particle 10 has a substantially flat upper surface 12 and a parallel, opposing, substantially flat lower surface. In certain embodiments according to the invention, the upper and lower surfaces are nonporous and appear smooth. Particle 10 is polygonal with a plurality of well-defined, substantially linear sides 14. In some embodiments according to the invention, particle 10 has three to four sides 14. Sides 14 may define a trilateral or quadrilateral shape, such as a triangle, a trapezoid (two parallel sides), a parallelogram (two pairs of parallel sides), or an irregular quadrilateral (*i.e*., no parallel sides). In contrast, powder particles 20 produced by vacuum freeze-drying or spray-drying typically have an irregular, rough surface 22 comprising a plurality of pores 24 as shown in FIG. 2. Particles produced by vacuum freeze-drying or spray-drying also may have a spheroid morphology.

The powder comprises particles with an average particle size having a largest dimension of ≤ 7 mm, such as ≤ 5 mm, ≤ 2 mm ≤ 1 mm, ≤ 0.5 mm, ≤ 0.2 mm, 0.05-7 mm, 0.1-5 mm, 0.1-2 mm, or 0.05-1 mm. In certain embodiments according to the invention, the powder comprises particle with an average size of 0.15-0.85 mm (i.e., 20 to 100 mesh), such as 0.18 mm-0.85 mm (i.e., 20 to 80 mesh).

In some embodiments according to the invention, a powder comprising an exogenous disaccharide has a glass transition temperature, Tg, which is greater than the glass transition temperature of a corresponding powder consisting essentially of dried plant-derived solids and up to 2% (w/w) water. The increased Tg may be attributed to adding exogenous disaccharide to the plant-derived material before it is subjected to drying, thereby forming a dried dispersion of plant-derived material and disaccharide. Disaccharides typically have higher glass transition temperatures than monosaccharides, such as glucose or fructose. For example, in one study, glucose was found to have a Tg^{cool} of 295 K (21 °C), whereas sucrose had a Tg^{cool} of 319 K (46 °C) and trehalose had a Tg^{cool} of 368 K (95 °C), as measured by cooling differential scanning calorimetry (Simperler et al., J. Phys. Chem. B. 2006, 110, 19678-19684). Thus, in some embodiments according to the invention, a disaccharide with a Tg at least 20 °C higher than glucose is used to prepare the powder.

Some embodiments of the claimed powders have a shelf life of at least 1 month, at least 2 months, at least 3 months, at least 6 months, at least 1 year, at least 2 years, or at least 3 years when stored at 20-25 °C. Certain embodiments of the claimed powders have a shelf life of at least 1 week, at least 2 weeks, at least 1 month, at least 2 months, at least 3 months, at least 6 months, or at least 1 year when stored at 30-35 °C. Advantageously, the low moisture content of the powder, *i.e*., ≤ 5% (w/w), and the drying technique using infrared radiation (described below) also inhibits microbial growth and, if using specific infrared wavelengths/temperature settings, can deactivate enzymes that can degrade the dehydrated fruit/vegetable over time, thereby further increasing shelf life and preserving the powder.

The disclosed powders are readily soluble in water. As used herein with respect to powders that include plant-derived solids (*e.g*., solids from whole fruit/vegetable purees), the term "soluble" means that the powder is dispersible and forms a substantially uniform suspension in water. Some embodiments of the claimed powders are soluble in water at ambient temperature. For example, a quantity of powder equivalent to one serving size of a fruit or vegetable (*e.g*., a quantity of powder sufficient to provide 7-90 g of dried fruit or 3-90 g of dried vegetable (see Tables 1-2)) may be readily soluble in 250 mL of water. In certain embodiments according to the invention, a quantity of powder equivalent to one serving size may be readily soluble in 200 mL, 150 mL, 100 mL, or even less than 100 mL of water at ambient temperature.

The powders retain at least 90% of the nutrients found in a corresponding fruit/vegetable before drying. In certain embodiments, at least 95%, at least 97%, at least 99%, 90-95%, 90-97%, 90-100%, or 95-100% of the nutrients from the undried fruit/vegetable puree and/or juice are retained in the powder. Thus an amount of powder sufficient to provide one serving size of fruit or vegetable has at least 90%, such as 90-100%, of the nutrients found in one serving size of a corresponding fresh fruit or fresh vegetable.

### III. Preparation

A method for preparing the disclosed compositions includes drying at least one plant-derived product in the form of a puree, a juice, a syrup, a nectar, or a combination thereof to produce a dried product including ≤ 5% (w/w) water, such as ≤ 2% (w/w). The dried product is comminuted to produce a powder. In some embodiments according to the invention, a single plant-derived product is used. In other embodiments according to the invention, a combination of plant-derived products, such as a combination of fruits and/or vegetables, is used.

In one embodiment according to the invention, a puree is used to make the dried product. In another embodiment according to the invention, a juice is used to make the dried product. In still another embodiment according to the invention, a blend of puree and juice is used to make the dried product. In some embodiments according to the invention, the blend includes 10-50% (w/w) juice and 50-90% (w/w) puree. For example, the blend may include 20-50% (w/w) juice and 50-80% (w/w) puree, such as 20% (w/w) juice and 80% (w/w) puree, 32% (w/w) juice and 68% (w/w) puree, or 50% (w/w) juice and 50% (w/w) puree. In certain embodiments according to the invention, a natural color and/or natural flavor is added to the puree, juice, or puree/juice blend. Adding a natural color and/or natural flavor can promote a more consistent appearance and/or taste among multiple batches of dried product formed from a particular fruit, vegetable, or combination thereof.

A puree may be formed by any suitable method. In some embodiments, a puree is formed using a shear pump. A shear pump may produce puree particles having an average size of a few hundred microns. In some examples, a shear pump produces puree particles having an average size of less than 177 µm, or less than 149 µm (80 to 100 mesh). In certain embodiments, a puree is formed using a colloidal mill. Puree particles formed by a colloidal mill may have an average size of less than 50 µm, less than 20 µm, or less than 10 µm, such as an average size of 3-5 µm. In some embodiments, dried products made from a puree produced by a colloidal mill demonstrate enhanced dispersibility when mixed with water as compared to dried products made from purees produced by other methods. For example, the dried product may produce a substantially uniform dispersion in water wherein individual product particles are not visible to the naked eye or detected in the mouth as particles.

The method further includes adding a disaccharide (trehalose and/or sucrose) to a plant-derived product (*e.g*., a puree, a juice, a syrup, a nectar, or a combination thereof) in accordance with claim 1 to form a mixture of plant-derived product and disaccharide, and then drying the mixture to form the product. In certain examples, the disaccharide is dissolved in a quantity of water, and added to the plant-derived product(s) as a disaccharide solution. The mixture of plant-derived product and disaccharide solution is then dried in accordance with claim 1. The dried product is comminuted to produce a powder. The amount of disaccharide added to the mixture is effective to produce a flowable powder. In some instances of the disclosure, the dried mixture and the resulting powder comprise ≤ 5% (w/w) water.

An amount of an exogenous trehalose and/or sucrose is added to the plant-derived product to produce a final dried composition including 10% to 60% (w/w) exogenous trehalose and/or sucrose. In certain embodiments, the trehalose and/or sucrose is added in an amount sufficient to provide a composition having 10-50%, 20-60%, 20-50%, 10-40%, 20-40%, or 30-50% exogenous disaccharide. Suitable disaccharides are sucrose and trehalose.

In some embodiments according to the invention, prior to drying, the mixture of plant-derived product (*e.g*., puree, juice, or puree/juice blend, and optionally natural flavor and/or color) and disaccharide is heated and/or blended to provide a substantially homogeneous mixture and to ensure substantially complete dissolution of the disaccharide. In certain embodiments according to the invention, the mixture is preheated to a temperature between 25 °C and 65 °C. The mixture desirably can be preheated using any of various suitable techniques or mechanisms prior to being introduced into a drying apparatus. For example, the mixture can be preheated in a large vat or kettle, or alternatively, the mixture can be pumped through a heat exchanger for preheating.

The plant-derived product/disaccharide mixture (or puree, juice, or puree/juice blend) in accordance with claim 1 is then dried in accordance with claim 1 to form a product comprising ≤ 2% (w/w) water. Drying includes heating in a drying apparatus until a desired moisture level is reached. The heating temperature is 65 °C to 90 °C, such as 70 °C to 80 °C or 75 °C to 80 °C. The dried product then is cooled, *e.g*., to a temperature of 25 °C to 40 °C, before exiting the drying apparatus. A small amount of additional drying may occur during the cooling process. In some embodiments, the dried product is quenched, or cooled rapidly, from the drying temperature to room temperature. The dried product is cooled from the drying temperature to room temperature over a time period of 2-10 minutes. In other instances of the disclosure, the mixture is cooled by gradually stepping down the temperature. In some instances of the disclosure, the cooling time is increased about 3X compared to samples that are rapidly cooled. The temperature may be reduced gradually, e.g., 2-6 °C every 30-60 seconds.

Exemplary drying apparatus suitable for performing the method are disclosed in U.S. Patent Publication No. 2012/0151790, and described in detail below. However, other drying apparatuses also may be suitable for practicing some versions of the method. For example, in some versions, a lyophilizer, freeze dryer, spray dryer, refractance-window dryer, drum dryer, tumble dryer, vacuum tray dryer, vacuum paddle dryer, or vacuum microwave dryer may be suitable.

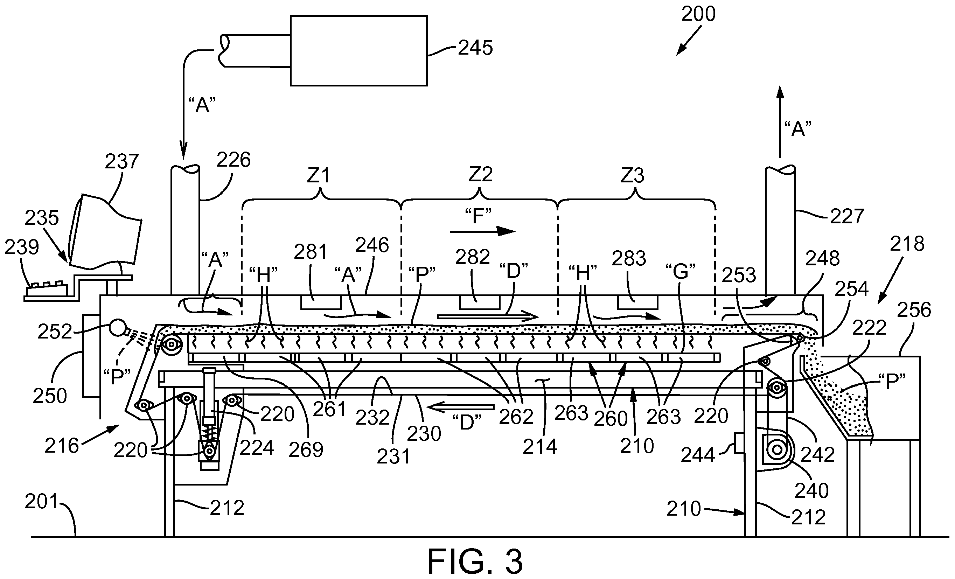

In certain embodiments according to the invention, the drying apparatus used in the claimed method has a plurality of heating zones (*e.g*., zones Z1, Z2, Z3 in FIG. 3), and a layer of the plant-derived product/disaccharide mixture (or puree, juice, or puree/juice blend) is deposited onto a support, such as a conveyor, that moves the mixture through the heating zones. Heat is supplied by dry radiant heat in the form of infrared energy below the support. In one embodiment according to the invention, the drying apparatus used in the claimed method has 16 heating zones and the conveyor moves at a rate sufficient to expose the mixture to each heating zone for 35-40 seconds. The mixture is heated to its maximum temperature (65-90 °C) as it passes through zones 1-9. As the mixture then passes through zones 10-16, the temperature is reduced. The temperature may be reduced, for example, by 5-6 °C in each zone compared to the previous zone. The dried mixture exits the drying apparatus at a temperature of 25 °C to 40 °C.

The drying temperatures and times are result-effective variables, which can be adjusted to provide a dried product with a desired moisture level and desired characteristics, such as brittleness and/or flowability. The mixture is dried at a sufficient temperature and for a sufficient period of time to form a product that includes ≤ 2%, ≤ 1.5%, or ≤ 1% (w/w) water.

The dried mixture is comminuted to produce a powder. Any suitable means can be used to comminute the dried mixture. For example, the dried product can be shear-milled, ball-milled, pebble-milled, rod-milled, impact milled, ground (*e.g*., with a mortar and pestle), rolled, etc. to produce a powder. In certain embodiments, the dried product is shear-milled. To preserve the product's low moisture content, the milling/grinding process is typically a dry process. The dried mixture is comminuted to produce a powder comprising particles with an average particle size having a largest dimension of ≤ 7 mm, such as an average particle size of 0.05-7 mm, such as 0.1-2 mm. In certain embodiments according to the invention, the dried mixture is comminuted to produce particles having an average size ranging from 0.15 to 0.85 µm (100 to 20 mesh), or 0.81-0.85 µm (80 to 20 mesh).

In certain instances, a small amount (*e.g*., ≤ 5% (w/w), such as ≤ 2% (w/w)) of a flowability agent is added to the dried mixture prior to, during, or after the comminution process. For instance, a small amount of silicon dioxide or tricalcium phosphate may be added to the dried mixture prior to comminuting the dried mixture. The flowability agent may aid in making a product with enhanced flowability and/or an enhanced flowability shelf life compared to a comparable product without the flowability agent. In such instances, the product comprises (i) a plurality of particles comprising the plant-derived product, water, and, if present, the exogenous disaccharide, and (ii) a plurality of particles comprising the flowability agent.

### IV. Drying Apparatus

A drying apparatus is disclosed that can be used to produce the compositions and powders described herein. The described apparatus are not claimed but are described to aid with the understanding of the invention only.

FIG. 3 is a side elevation view of a drying apparatus 200. The apparatus 200 comprises a chassis 210 which can be a rigid structure comprising various structural members including legs 212 and longitudinal frame rails 214 connected thereto. The legs 212 are configured to support the apparatus 200 on a floor 201 or other suitable base.

The chassis 210 can also comprise various other structural members, such as cross-braces (not shown) and the like. The chassis 210 can be generally constructed in accordance with known construction methods, including welding, fastening, forming and the like, and can be constructed from known materials such as aluminum, steel and the like. The apparatus 200 is generally elongated and has a first, intake end 216, and an opposite, distal, second, out feed end 218.

The apparatus 200 can further comprise a plurality of substantially parallel, transverse idler rollers 220 which are mounted on the chassis 210 and configured to rotate freely with respect thereto. At least one drive roller 222 can also be included in the apparatus 200 and can be supported on the chassis 210 in a substantially transverse manner as shown.

An actuator 240, such as an electric motor, can be included in the apparatus 200 as well, and can be supported on the chassis 210 proximate the drive roller 222. A drive linkage 240 can be employed to transfer power from the actuator 240 to the drive roller 222. A speed controller 244, such as an alternating current ("A/C") variable speed control device or the like, can be included to control the output speed of the actuator 240.

The apparatus 200 comprises a support surface 230 in the form of a conveyor belt, which has a first side 231 and an opposite second side 232. The support surface 230 is movably supported on the chassis 210. The support surface 230 is configured to allow radiant heat energy to pass therethrough from the second side 212 to the first side 211.

The support surface 230 desirably is fabricated from a material which is substantially transparent to radiant heat and also able to withstand temperatures of up to 300 degrees Fahrenheit. Desirably, the support surface 230 is fabricated from a material comprising plastic. The term "plastic" means any of various nonmetallic compounds synthetically produced, usually from organic compounds by polymerization, which can be molded into various forms and hardened, or formed into pliable sheets or films.

More preferably, the support surface 230 is fabricated from a material selected from the group consisting of acrylic and polyester. Such materials, when utilized in the fabrication of a support surface 230, are known to have the desired thermal radiation transmission properties for use in the disclosed drying apparatuses. Further, plastic resins can be formed into a uniform, flexible sheet, or into a seamless, endless belt, which can provide additional benefits.

Also, such materials are known to provide a smooth surface for even product distribution, a low coefficient of static friction between the support surface 230 and the product "P" supported thereon, flexibility, and resistance to relatively high temperatures. In addition, such materials are substantially transparent to radiant heat, have relatively high tensile strengths, and are relatively inexpensive and easily obtained.

As an endless belt form, the support surface 230 is preferably supported on the idler rollers 220 and drive roller 222. The support surface 230 can be configured to be driven by the drive roller 222 so as to move, or circulate, in the direction "D" relative to the chassis 210. As is seen, the support surface 230 can be configured so as to extend substantially from the intake end 216 to the out feed end 218. A take up device 224 can be supported on the chassis 210 and employed to maintain a given tension on the support surface 230.

The first side 231 of the support surface 230 is configured to support a layer of product "P" thereon as shown. The first side 231 is further configured to move the product "P" substantially from the intake end 216 to the out feed end 218. The product "P" can be in one of many possible forms, including liquid colloidal suspensions, solutions, syrups, and pastes. In the case of a liquid product "P" having a relatively low viscosity, an alternative version of the apparatus which is not shown can include a longitudinal, substantially upwardly-extending lip (similar to the lip 115 shown in FIG. 3) which can be formed on each edge of the support surface 230 to prevent the product from running off.

The product "P" can be applied to the first side 231 of the support surface 230 by an application device 252 which can be included in the apparatus 200 and which can be located proximate the intake end 216 of the apparatus 200. In the case of a liquid product "P," the product can be applied to the support surface 230 by spraying, as shown. Although FIG. 3 depicts a spraying method of applying the product "P" to the support surface 230, it is understood that other methods are equally practicable, such as dripping, brushing, and the like.

A removal device 254 can also be included in the apparatus 200. The removal device 254 is located proximate the out feed end 218, opposite a stationary corner element 253 such that the support surface 230 extends between the corner element 253 and the removal device 254, which is configured to remove the product "P" from the support surface 230. The product "P" can be in a dry or semi-dry state when removed from the support surface 230 by the removal device 254.

The corner element 253 can cause a sharp bend in the support surface 230 as shown. That is, as depicted, the corner element can be configured to cause the support surface 230 to turn sharply around a corner having a radius which is not more than about twenty times the thickness of the support surface 230. Also, desirably, the support surface 230 forms a turn at the corner element 253 which turn is greater than 90 degrees. More preferably, the turn is about between 90 degrees and 175 degrees.

The type of removal device 254 which is depicted can be particularly effective in removing certain types of product "P" which are substantially dry and which exhibit substantially self-adherence properties. It is understood, however, that other configurations of removal devices 254, which are not shown, can be equally effective in removing various forms of product "P" from the support surface, including scraper blades, low frequency vibrators, and the like. As the product "P" is removed from the support surface 230 at the out feed end 218, a collection hopper 256 can be employed to collect the dried product. Depending on the application, the dried product can be subjected to further processing, such as milling, grinding or otherwise processing the dried product into a powder.

The apparatus 200 comprises a heater bank 260 which is supported on the chassis 210. The heater bank 260 comprises one or more first heat sources 261 and one or more second heat sources 262. The heater bank 260 can also comprise one or more third heat sources 263 and at least one pre-heater heat source 269. The heat sources 261, 262, 263, 269 are supported on the chassis 210 and are configured to direct radiant heat "H" across a gap "G" and toward the second side 232 of the support surface 230.

Each of the heat sources 261, 262, 263, 269 desirably are dry radiant heat sources. The term "dry radiant heat source" means a device which is configured to produce and emit radiant heat, as well as direct the radiant heat across a gap to another body, without the incorporation or utilization of any liquid heating medium or substance of any kind, including water. The term "gap" means a space which separates two bodies between which heat is transferred substantially by radiation and wherein the two bodies do not contact one another.

The heat sources 261, 262, 263, 269 are preferably selected from the group consisting of gas radiant heaters and electric radiant heaters. Furthermore, each of the heat sources 261, 262, 263, 269 is preferably configured to modulate, or incrementally vary, the amount of radiant heat produced thereby in a proportional manner. The operation of the heat sources 261, 262, 263, 269 is more fully described below.

The heat sources 269, 261, 262, 263 can comprise heating elements that produce radiant heat in the infrared spectrum. Each heat source may comprise a heater support that supports a set of one or more quartz heating elements for producing infrared radiation. Each such heating element can comprise a coiled wire encased in quartz tubing. The quartz tubing can be frosted, as known in the art, to increase the heat capacitance of the heating element. The quartz tubing can include additives, such as silicon or graphite, to further increase the heat capacitance of the heating element. Increased heat capacitance can provide better control of the operating temperature of the heating element, such as if an "on/off' type switch or relay is used to modulate current to the heating elements.

Each radiant heat source is desirably configured to reach a temperature greater than 212 °F (100 °C), and more desirably, the heat source is configured to reach a temperature significantly greater than 212 °F, such as greater than 300 °F (about 149 °C), or greater than 400 °F (about 204 °C). Typically, when drying liquid products as disclosed herein, the temperature of a radiant heat source is varied between about 250 °F (about 121 °C) and 500 °F (about 260 °C). Depending characteristics of the product (e.g., thickness, viscosity, moisture content), the temperature of the heated product typically varies between about 110 °F (about 43 °C) to about 194 °F (90 °C) throughout the length of the dryer.

Desirably, each radiant heat source can be configured to modulate so that the temperature thereof can be increased or decreased in a rapid manner. Each heat source can be configured to modulate by employing an "on/off" control scheme. Desirably, however, each heat source can be configured to modulate by employing a true proportional control scheme, such as by using a phase angle control module to regulate the voltage to each heat source.

The apparatus 200 can comprise an enclosure 246, such as a hood or the like, which is employed to cover the apparatus. The enclosure 246 can be configured to contain conditioned air "A" which can be introduced into the enclosure through an inlet duct 226. Before entering the enclosure, the conditioned air "A" can be processed in air conditioning unit (not shown) so as to have a temperature and humidity which is beneficial to drying of the product "P." The conditioned air "A" can circulate through the enclosure 246 before exiting the enclosure by way of an outlet duct 228. Upon exiting the enclosure 246, the conditioned air "A" can be returned to the air conditioning unit, or can be vented to exhaust.

The apparatus 200 can further comprise a first sensor 281, a second sensor 282, and a third sensor 283. It is understood that, although three sensors 281, 282, 283 are depicted, any number of sensors can be included in the apparatus 200. Each of the sensors 281, 282, 283 can be supported on the enclosure 246, or other suitable structure, in a substantially evenly spaced manner as shown. Each of the sensors 281, 282, 283 can be any of a number of sensor types which are known in the art. Desirably, in the case of detecting temperature of the product "P," each of the sensors 281, 282, 283 is either an infrared detector or a bimetallic sensor.

Desirably, the sensors 281, 282, 283 are positioned so as to be substantially exposed to the first side 231 of the support surface 230. The sensors 281, 282, 283 are configured to detect and measure at least one characteristic of the product "P" while the product is movably supported on the first side 231 of the support surface 230. Characteristics of the product "P" which are detectable and measurable by the sensors 281, 282, 283 can include the temperature, moisture content, and chemical composition of the product. Operational aspects of the sensors 281, 282, 283 are more fully described below.

The apparatus 200 can comprise a controller 250 for controlling various functions of the apparatus during operation thereof. The controller 250 can include any of a number of devices such as a processor (not shown), a readable memory (not shown), and an algorithm (not shown). The controller 250 will be discussed in further detail below. In addition to the controller 250, the apparatus 200 can include an operator interface 235 which can be in communication with the controller.

The operator interface 235 can be configured to relay information regarding the operation of the apparatus 200 to the operator by way of a display screen 237 such as a CRT or the like. Conversely, the operator interface 235 can also be configured to relay data or operational commands from the operator to the controller 250. This can be accomplished by way of a keypad 239 or the like which can also be in communication with the controller 250.

As is seen, a plurality of control zones Z1, Z2, Z3 are defined on the apparatus 200. That is, the apparatus 200 includes at least a first control zone Z1, which is defined on the apparatus between the intake end 216 and the out feed end 218. A second control zone Z2 is defined on the apparatus 200 between the first control zone Z1 and the out feed end 218. The apparatus 200 can include additional control zones as well, such as a third control zone Z3 which is defined on the apparatus between the second control zone Z2 and the out feed end. Each control zone Z1, Z2, Z3 is defined to be stationary relative to the chassis 210.

As shown in FIG. 3, each first heat source 261, as well as the first sensor 281 are located within the first control zone Z1. Likewise, each second heat source 262, and the second sensor 282, are located within the second control zone Z2. Each third heat source 263, and the third sensor 283, are located within the third control zone Z3. It is further evident that the support surface 230 moves the product "P" through each of the control zones Z1, Z2, Z3. That is, as the actuator 240 moves the support surface 230 in the direction "D," a given portion of the product "P" which is supported on the support surface, is moved successively through the first control zone Z1 and then through the second control zone Z2.

After being moved through the second control zone Z2, the given portion of the product "P" can then be moved through the third control zone Z3 and on to the removal device 254. As is seen, at least a portion of the heater bank 260, such as the pre-heater heat source 269, can lie outside any of the control zones Z1, Z2, Z3. Furthermore, a cooling zone 248 can be defined relative to the chassis 210 and proximate the out feed end 218 of the apparatus 200. The cooling zone 248 can be configured to employ any of a number of known means of cooling the product "P" as the product passes through the cooling zone.

For example, the cooling zone 248 can be configured to employ a refrigerated heat sink (not shown) such as a cold black body, or the like, which is exposed to the second side 232 of the support surface 230 and which positioned within the cooling zone. Such a heat sink can be configured to cool the product "P" by radiant heat transfer from the product and through the support surface 230 to the heat sink. One type of heat sink which can be so employed can be configured to comprise an evaporator coil which is a portion of a refrigeration system utilizing a fluid refrigerant such as Freon or the like.

The cooling zone 248 can have a relative length which is different than depicted. In addition, other means of cooling can be employed. For example, the cooling zone 248 can be configured to incorporate a convection cooling system (not shown) in which cooled air is directed at the second side 232 of the support surface 230. Furthermore, the cooling zone 248 can be configured to incorporate a conductive cooling system (not shown) in which refrigerated rollers or the like contact the second side 232 of the support surface 230. As depicted in FIG. 3, the product "P" can be applied to the first side 231 of the moving support surface 230 proximate the intake end 216.

The support surface 230 is driven by the actuator 240 by way of the drive link 242 and drive roller 222 so as to revolve in the direction "D" about the idler rollers 220. The product "P" can be in a substantially liquid state when applied to the support surface 230 by the application device 252. The product "P," which is to be dried by the apparatus 200, is fed there through in the feed direction "F" toward the out feed end 218.

The product "P," while supported on the support surface 230 and moved through the apparatus 200 in the direction "F," passes the heater bank 260 which can be positioned in substantially juxtaposed relation to the second side 232 of the support surface so as to be exposed thereto as shown. The heater bank 260 comprises one or more first heat sources 261 and one or more second heat sources 262 which are configured to direct radiant heat "H" toward the second side 232 and through the support surface 230 to heat the product "P" which is moved in the direction "F."

The heater bank 260 can also comprise one or more third heat sources 263 and one or more pre-heater heat sources 269 which are also configured to direct radiant heat "H" toward the second side 232 to heat the product "P." The product "P," while moving on the support surface 230 in the feed direction "F," is dried by the radiant heat "H" to a desired moisture content, and then removed from the support surface at the out feed end 218 by the removal device 254.

The product "P," once removed from the support surface 230, can be collected in a collection hopper 256 or the like for storage, packaging, or further processing. The support surface 230, once the product "P" is removed there from, returns to the intake end 216 whereupon additional product can be applied by the application device 252.

In order to promote efficient product drying as well as high product quality, conditioned air "A" can be provided by an air conditioning unit (HVAC) 245, and can be circulated about the product "P" by way of the enclosure 246, intake duct 226, and outlet duct 228 as the product is moved through the apparatus 200 in the feed direction "F" concurrent with the direction of the movement of the product.

As a further enhancement to production rate and product quality, a plurality of control zones can be employed. The term "control zone" means a stationary region defined on the apparatus 200 through which the product "P" is moved and in which region radiant heat is substantially exclusively directed at the product by one or more dedicated heat sources which are regulated independently of heat sources outside of the region. That is, a given control zone includes a dedicated servomechanism for controlling the amount of heat directed at the product "P" which is within the given control zone, wherein the amount of heat is a function of a measured characteristic of the product.

As is seen, the support surface 230 is configured to move the product "P" in succession through a first control zone Z1, and then through a second control zone Z2. This can be followed by a third control zone Z3. Within the first control zone Z1, one or more first heat sources 261 direct radiant heat "H" across the gap "G" toward the product "P" as the product moves through the first control zone. Likewise, within the second control zone Z2 and within the third control zone Z3, one or more second heat sources 262 and one or more third heat sources 263, respectively, direct radiant heat "H" across the gap "G" toward the product "P" as the product moves through the second and third control zones, respectively.

The temperature of, and thus the amount of heat "H" produced by, the first radiant heat sources 261 is regulated independently of the temperature of, and amount of heat produced by, the second heat sources 262. Similarly, the third heat sources 263 are regulated independently of the first and second heat sources 261, 262. The use of the control zones Z1, Z2, Z3 can provide for greater control of production parameters as compared to prior art devices.

That is, specific product profiles and heat curves can be attained with the use of the apparatus 200 because the product "P" can be exposed to different amounts of heat "H" in each control zone Z1, Z2, Z3. Specifically, for example, the first heat sources 261 can be configured to produce heat "H" at a first temperature. The second heat sources 262 can be configured to produce heat "H" at a second temperature which is different from the first temperature. Likewise, the third heat sources 263 can be configured to produce heat "H" at a third temperature.

Thus, as the product "P" proceeds through the apparatus in the feed direction "F," the product can be exposed to a different amount of heat "H" in each of the control zones Z1, Z2, Z3. This can be particularly useful, for example, in decreasing the drying time of the product "P" as compared to drying times in prior art apparatus. This can be accomplished by rapidly attaining a given temperature of the product "P" and then maintaining the given temperature as the product proceeds in succession through the control zones Z1, Z2, Z3. The use of the control zones Z1, Z2, Z3 can also be useful in providing tight control of the amount of heat "H" which is transmitted to the product "P" so as to provide greater product quality. That is, product quality can be enhanced by utilizing the control zones Z1, Z2, Z3 to minimize over-exposure and under-exposure of the product "P" to heat energy "H."

Assuming a given product "P" is relatively moist and at ambient temperature when placed onto the support surface 230 by the application device 252, a relatively large amount of heat "H" is required to raise the temperature of the product to a given temperature such as 100 °C. Thus, a pre-heater heat source 269 can be employed to pre-heat the product "P" before the product enters the first control zone Z1. The pre-heater heat source 269 can be configured to continually produce radiant heat "H" at a maximum temperature and to direct a maximum amount of heat "H" to the product "P."

As the product "P" enters the first control zone Z1, the first heat sources 261 within the first control zone Z1 can be configured to produce an amount of heat "H" which sufficient to attain the given desired product temperature. The first sensor 281, in conjunction with the controller 250, can be employed to regulate the temperature of the first heat sources 261 in order to transfer the desired amount of heat "H" to the product "P." The first sensor 281 is configured to detect and measure at least one given characteristic of the product "P" while the product is within the first control zone Z1. For example, the first sensor 281 can be configured to detect and measure the temperature of the product "P" while the product is within the first control zone Z1.

The first sensor 281 can detect and measure a characteristic of the product "P" while the product is in the first control zone Z1 and then relay that measured characteristic to the controller 250. The controller 250 can then use the measurement from the first sensor 281 to modulate the temperature, or heat output, of the first heat sources 261. That is, the heat "H" produced by the first heat sources 261 can be regulated as a function of a measured product characteristic of the product "P" within the first control zone Z1 as detected and measured by the first sensor 281. This measured product characteristic can include, for example, the temperature of the product.

The second sensor 282 is similarly employed to detect and measure at least one characteristic of the product "P" while the product is within the second control zone Z2. Likewise, the third sensor 283 can be employed to detect and measure at least one characteristic of the product "P" while the product is within the third control zone Z3.

The product characteristics detected and measured by the second and third sensors 282, 283 within the second and third control zones Z2, Z3, respectively, can be likewise utilized to modulate the amount of heat "H" produced by the second and the third heat sources 262, 263 to maintain a specific temperature profile of the product "P" as the product progresses through each of the control zones.

In the case wherein the product "P" is heated rapidly to a given temperature and then maintained at the given temperature, the first heat sources 261 will likely produce heat "H" at a relatively high temperature in order to rapidly increase the product temperature to the given temperature by the time the product "P" leaves the first zone Z1. Assuming that the product "P" is at the given temperature when entering the second control zone Z2, the second and third heat sources 262, 263 will produce heat "H" at a successively lower temperatures because less heat "H" is required to maintain the temperature of the product as the moisture content thereof decreases.

As mentioned above, the sensors 281, 282, 283 can be configured to detect and measure any of a number of product characteristics, such as moisture content. This can be particularly beneficial to the production of a high-quality product "P." For example, in the above case wherein the product temperature has reached the given temperature as the product "P" enters the second control zone Z2, the second and third sensors 282, 283 can detect and measure product moisture content as the product progresses through the respective second and third control zones Z2, Z3.

If the second sensor 282 detects and measures a relatively high product moisture content of the product "P" within the second control zone Z2, then the controller 250 can modulate the second heat sources 262 so as to continue to maintain the product temperature at the given temperature in order to continue drying of the product. However, if the second sensor 282 detects a relatively low product moisture content, then the controller 250 can modulate the second heat sources 262 so as to reduce the product temperature in order to prevent over-drying the product "P."

Likewise, the third sensor 283 can detect and measure product moisture content within the third control zone Z3, whereupon the controller can determine the proper amount of heat "H" to be produced by the third heat sources 263. Although three control zones Z1, Z2, Z3 are depicted, it is understood that any number of control zones can be incorporated.

In furtherance of the description of the interaction between the controller 250, the sensors 281, 282, 283, and the heat sources 261, 262, 263 provided by the above example, a given control zone Z1, Z2, Z3 can be described as a separate, independent, and exclusive control loop which comprises each associated sensor and each associated heat source located within the given control zone, and which is, along with the controller, configured to independently regulate the amount of heat "H" produced by the associated heat sources as a function of at least one characteristic of the product "P" measured by the associated sensor.

That is, each sensor 281, 282, 283 associated with a given control zone Z1, Z2, Z3, can be considered as configured to provide control feedback to the controller 250 exclusively with regard to characteristics of a portion of the product "P" which is in the given control zone. The controller 250 can use the feedback to adjust the output of the heat sources 261, 262, 263 in accordance with a temperature profile or other such parameters defined by the operator or otherwise stored within the controller.

The plurality of control zones Z1, Z2, Z3 of the apparatus 200 can also be employed to attain specific product profiles which can be beneficial to the quality of the product. For example, it can be assumed that the quality of a given product "P" can be maximized while achieving an extremely low moisture content by following a given product temperature profile during drying. The given product temperature profile can dictate that, as the product "P" passes successively through the first, second, and third control zones Z1, Z2, Z3, the temperature of the product initially increases rapidly to a maximum given temperature, whereupon the temperature of the product "P" gradually decreases until it is removed from the support surface 230.

In that case, the first sensor 281, first heat sources 261 and controller 250 can operate in a manner similar to that described above in order to rapidly increase the product "P" temperature to a first temperature which can be reached as the product "P" passes through the first control zone Z1. The first temperature can correspond to a relatively large amount of heat "H" which is transferred to the product "P" which initially contains a high percentage of moisture.

As the product "P" passes through the second control zone Z2, the second sensor 282, second heat sources 262 and controller 250 can operate to decrease the product temperature to a relatively medium second temperature which is lower than the first temperature. The second temperature can correspond to a lesser amount of heat "H" which is required as the moisture content of the product "P" drops.

Likewise, as the product "P" passes through the third control zone Z3, the third sensor 283, third heat sources 263 and controller 250 can operate to decrease the product temperature further to a relatively low third temperature which is lower than the second temperature. The third temperature can correspond to a relatively low amount of heat "H" which is required as the product "P" approaches the desired dryness.

In addition to regulating the temperature of the heat sources 261,262,263, the controller 250 can also be configured to regulate the speed of the support surface 230 relative to the chassis 210. This can be accomplished by configuring the controller 250 so as to modulate the speed of the actuator 240. For example, as in the case where the actuator 240 is an A/C electric motor, the controller can be configured so as to modulate the variable speed control unit 244 by way of a servo or the like.

The speed, or rate of movement, of the support surface 230 can affect the process of drying the product "P" which is performed by the apparatus 200. For example, a relatively slow speed of the support surface 230 can increase the amount of heat "H" which is absorbed by the product "P" because the slower speed will cause the product to be exposed to the heat "H" for a longer period of time. Conversely, a relatively fast speed of the support surface 230 can decrease the amount of heat "H" which is absorbed by the product "P" because the faster speed will result in less exposure time during which the product is exposed to the heat.

Moreover, the controller 250 can also be configured to regulate various qualities of the conditioned air "A" which can be made to circulate through the enclosure 246. For example, the controller 250 can be made to regulate the flow rate, relative humidity, and temperature of the conditioned air "A." These qualities of the conditioned air "A" can have an effect on both the drying time and quality of the product "P."

In another alternative version of the apparatus 200 which is not shown, the enclosure 246 can be configured so as to be substantially sealed against outside atmospheric air. In that case, the chemical composition of the conditioned air "A" can be controlled so as to affect the drying process in specific manners, or to affect or preserve the chemical properties of the product "P." For example, the conditioned air "A" can substantially be inert gas which can act to prevent oxidation of the product "P."

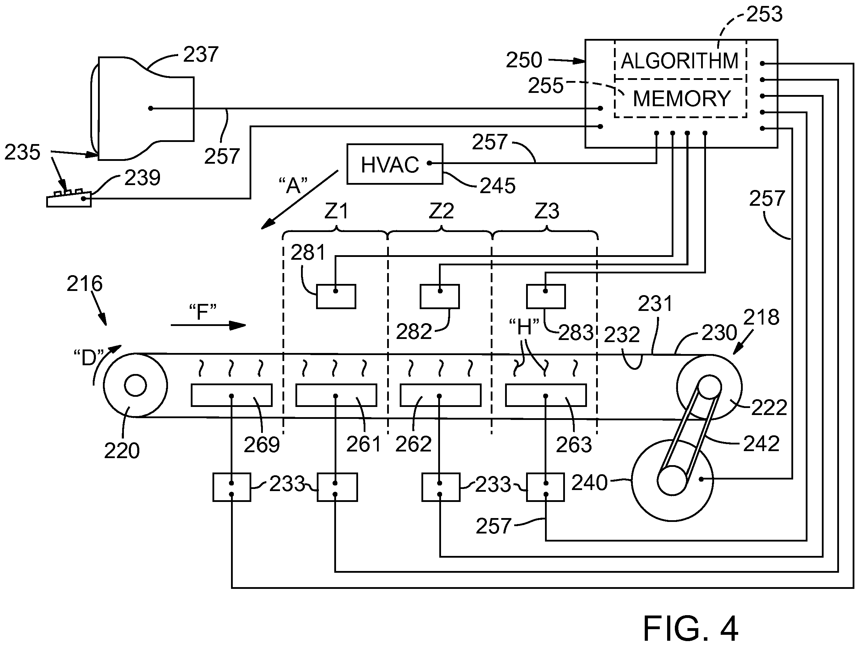

Moving to FIG. 4, a schematic diagram is shown which depicts one possible configuration of the apparatus 200 which comprises a plurality of communication links 257. The communication links 257 are configured to provide for the transmission of data signals between the various components of the apparatus 200. The communication links 257 can be configured as any of a number of possible communication means, including those of hard wire and fiber optic. In addition, the communication links 257 can comprise wireless communication means including infrared wave, micro wave, sound wave, radio wave and the like.

A readable memory storage device 255, such as a digital memory, can be included within the controller 250. The readable memory device 255 can be employed to store data regarding the operational aspects of the apparatus 200 which are received by the controller by way of the communication links 257, as well as set points and other stored values and data which can be used by the controller 250 to control the drying process. The controller 250 can also include at least one algorithm 253 which can be employed to carry out various decision-making processes required during operation of the apparatus 200.

The decision-making processes taken into account by the algorithm 253 can include maintaining integrated coordination of the several variable control aspects of the apparatus 200. These variable control aspects comprise the speed of the support surface 230, the amount of heat "H" produced by each of the heat sources 261, 262, 263, 269, and the product characteristic measurements received from the sensors 281, 282, 283. Additionally, the algorithm 253 can be required to carry out the operational decision-making processes in accordance with various set production parameters such as a product temperature profile and production rate.

The communication links 257 can provide data transmission between the controller 250 and the operator interface 235 which can comprise a display screen 237 and a keypad 239. That is, the communication links 257 between the controller 250 and operator interface 235 can provide for the communication of data from the controller to the operator by way of the display screen. Such data can include various aspects of the apparatus 200 including the temperature and moisture content of the product "P" with regard to the position of the product within each of the control zones Z1, Z2, Z3.

Additionally, such data can include the speed of the support surface with respect to the chassis 210 and the temperature of each of the heat sources 261, 262, 263, 269. The communication links 257 can also provide for data to be communicated from the operator to the controller 250 by way of the keypad 239 or the like. Such data can include operational commands including the specification by the operator of a given product temperature profile.

A communication link 257 can be provided between the controller 250 and the HVAC unit 245 so as to communicate data there between. Such data can include commands from the controller 250 to the HVAC unit 245 which specify a given temperature, humidity, or the like, of the conditioned air "A." A communication link 257 can also be provided between the controller 250 and the actuator 240 so as to communicate data there between. This data can include commands from the controller 250 to the actuator which specify a given speed of the support surface 230.

Additional communication links 257 can be provided between the controller 250 and each of the sensors 281, 282, 283 so as to communicate data between each of the sensors and the controller. Such data can include measurements of various characteristics of the product "P", such as the temperature of the product "P", the moisture content of the product, and/or the chemical composition of the product. Other communication links 257 can be provided between the controller 250 and each of the heat sources 261, 262, 263, 269 so as to provide transmission of data there between.

This data can include commands from the controller 250 to each of the heat sources 261, 262, 263, 269 which instruct each of the heat sources as to the amount of heat "H" to produce. As can be seen, the apparatus 200 can include a plurality of control devices 233, which can comprise electrical relays, wherein each one of the control devices is connected by way of respective communication links 257 to the controller 250. Each of the control devices can be, for example, an electrical relay in the case of an electrically powered heat source, or alternatively, a servo valve in the case of a gas powered heat source. In particular instances, each control device 233 can comprise an "on/off' solid state relay or a phase angle control module that can vary the voltage to one or more heating elements, as further described below.

A drying apparatus can be capable of
independently controlling the temperature of the product being heated (e.g., to achieve a desired temperature profile) and the wavelength of the radiation (e.g., to maximize the heat transfer rate). To such ends, a drying apparatus can be provided with one or more heat sources that are movable relative to the product "P" in order to increase or decrease the gap or spacing between the heat source and the product "P". By adjusting the gap between the product and the heat source, it is possible to control the source temperature in such a manner that produces the desired product temperature and wavelength of radiation. For example, if a particular drying profile requires that the temperature of the product remain substantially constant through one or more control zones, then the product typically is subjected to less heat in each successive control zone. To maintain the desired product temperature and wavelength of radiation, the heaters in a control zone can be moved farther away from the product to decrease the heat applied to the product while maintaining the source temperature to produce radiation at the desired wavelength. For example, if desired, the source temperature and heater positions can be controlled to produce a predetermined constant wavelength in successive zones to compensate for changes in energy required to evaporate moisture as the moisture content in the product decreases as it is dried through each of the zones.

Alternatively, if desired, the source temperature can be adjusted to produce a desired wavelength in a control zone that is different than the wavelength in the preceding control zone and the gap between the heat source and the product can be adjusted accordingly to achieve the desired product temperature. This allows the dryer to compensate for other product characteristics that can vary in each zone or from zone to zone during the drying process, such as the emissivity of the product, the thickness of the product, changes in sensitivity of the product (or specific compounds in the product) to a particular wavelength of IR (infrared radiation), and the ability to release bound moisture in the product (the ability to release bound moisture decreases as the product is dried). The controller of the dryer can be configured to continuously monitor the wavelength of the heat sources and the temperature of the product during the drying process, and automatically adjust the temperature and the positions of the heat sources to maintain the desired product temperature and wavelength within each heating zone.

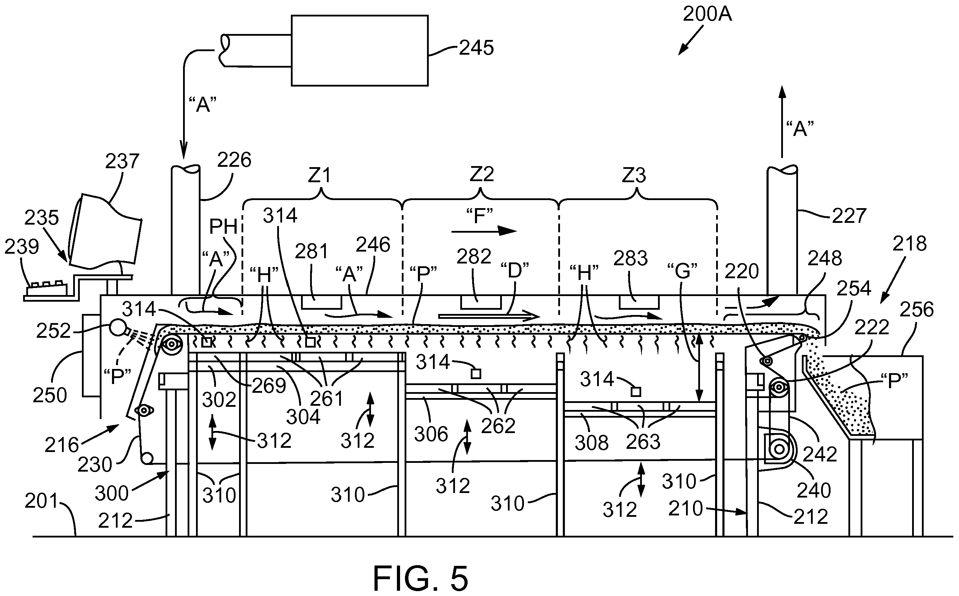

Referring now to FIG. 5, there is shown a drying apparatus 200A.
The drying apparatus 200A is a modification of the drying apparatus 200 of FIGS. 3 and 4. One difference between the drying apparatus 200A and the drying apparatus 200 is that the drying apparatus 200A has heat sources that are movable upwardly and downwardly relative to the product "P". The drying apparatus 200A includes a chassis 300 that is modified relative to the chassis 210 of FIG. 3 in that it includes movable platforms, or heater supports, 302, 304, 306, 308 that support heat sources 269, 261, 262, 263, respectively. As with the drying apparatus of FIG. 3, the heat sources 269, 261, 262 263 can comprise heating elements that produce radiant heat in the infrared spectrum. Each platform 302, 304, 306, 308 is mounted on a pair of upright legs 310 of the chassis 300 and is configured to move upwardly and downwardly relative thereto, as indicated by double-headed arrows 312. Each heater support can support a set of one or more quartz heating elements for producing infrared radiation, as described above in connection with FIG. 3.

As shown in FIG. 5, each heat source within a control zone Z1, Z2, or Z3 is supported on a common platform, and therefore each heat source within a specific control zone moves upwardly and downwardly together.
Alternatively, less than three heat sources can be mounted on a single platform. For example, each heat source can be mounted on a separate platform and its vertical position can be adjusted relative to other heat sources within the same control zone. In still another alternative, a single platform can extend into multiple zones to support heat sources in adjacent control zones.

Mounted within each heating zone (control zones Z1, Z2, Z3 and pre-heat zone PH) directly above a heat source are one or more temperature-sensing devices to measure the temperature of the heat sources, such as one or more thermocouples 314. Each thermocouple 314 is positioned to monitor the surface temperature of the heating elements of a corresponding heat source and is in communication with the controller 250 (FIG. 4). As described in greater detail below, a feedback control loop is provided to continuously monitor the temperature of the heat sources within each heating zone and adjust the vertical position of the heat sources and/or the temperature of the heat sources to achieve a predetermined wavelength and a predetermined product temperature using radiant energy. In the illustrated example, one thermocouple is located within each heating zone. However, in other versions, more than one thermocouple can be used in each heating zone. For example, if each heat source is mounted on its own platform, then it would be desirable to position at least one thermocouple above each heat source. A thermocouple 314 can be mounted at any convenient position adjacent the heating elements of a corresponding heat source. For example, a thermocouple can be mounted to the support frame or pan of a heat source that supports one or more heating elements.

In lieu of or in addition to thermocouples, the dryer can include in each heating zone one or more sensors, such as an infrared spectrometer or radiometer, for measuring the energy or the wavelength of infrared energy that reaches the product. Such sensors can be mounted at any convenient locations on the dryer, such as directly above the support surface 230 and the product, preferably directly above an edge portion of the support surface that is not covered by the layer of product. This method has the advantage of allowing the system to compensate for changes in the actual IR wavelength reaching the product that can vary due to the transparency and refractive properties of the support surface 230, as well as IR energy that is emitted from the heater pan surfaces or from reflectors in the heater pans. The wavelength or energy sensors can replace the heater thermocouples 314 (or can be used in combination with the thermocouples) as a means to determine the wavelength of radiant energy emitted from the heat sources in a control scheme whereby the vertical positions of the heat sources and/or their temperatures are adjusted to achieve a predetermined wavelength and a predetermined product temperature within each zone.

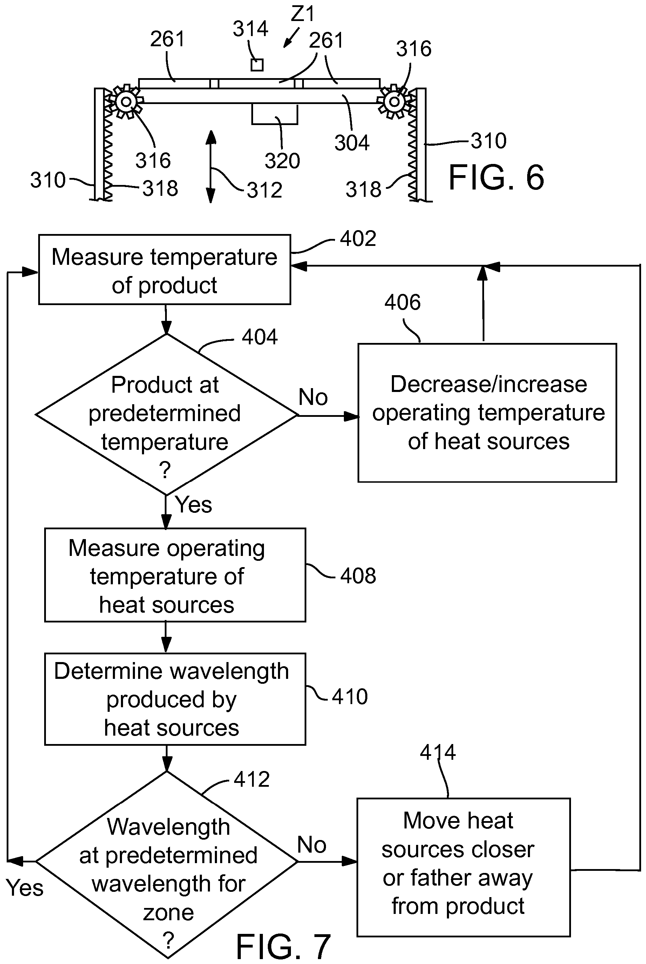

Any suitable techniques or mechanisms can be used to effect vertical movement of each platform 302, 304, 306, 308 relative to support legs 310. FIG. 6, for example, is a schematic illustration of control zone Z1 showing platform 304 having drive gears 316 mounted on opposite sides of the platform. Each drive gear 316 engages a respective rack gear 318 mounted on a respective support leg 310 of the chassis. The drive gears 316 can be powered by an electric motor 320 mounted at a convenient location on the platform. The motor 320 can be operatively coupled to each drive gear 316 by a drive shaft (not shown) such that operation of the motor is effective to drive the drive gears, which translate along the rack gears to move the platform upwardly or downwardly. The motor 320 is in communication with the controller 250 (FIG. 4), which controls the vertical position of the platform. The platforms of the other heating zones can have a similar configuration.

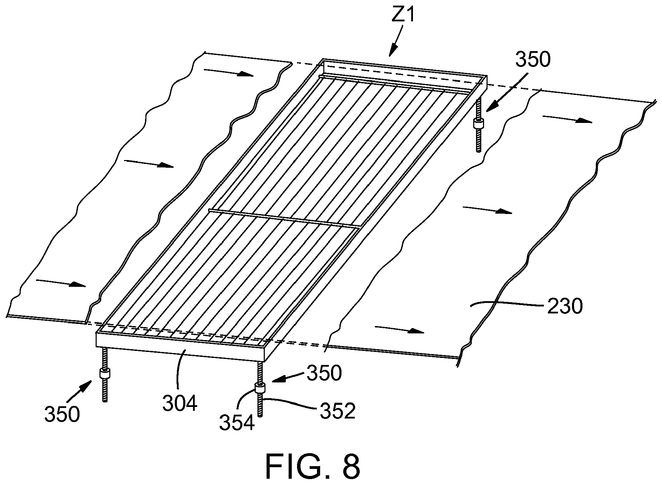

FIG. 8 shows an alternative configuration for effecting vertical movement of a platform. A platform 304 is mounted to four linear actuators 350 (one mounted at each corner of the platform), although a greater or fewer number of actuators can be used. Each actuator 350 in the illustrated embodiment comprises a threaded shaft 352 and a nut 354 disposed on the shaft. The platform 304 is supported on the upper ends of the shafts 352. Synchronized rotation of the nuts 354 (controlled by the controller 350) causes the platform 304 to be raised or lowered relative to the conveyor 230. It should be noted that various other mechanisms can be used to effect vertical movement of the platforms. For example, any of various pneumatic, electromechanical, and/or hydraulic mechanisms can be used to move a platform upwardly and downwardly, including various types of linear actuators, screw motors, screw rails, and the like.

As can be appreciated, adjusting the vertical position of the heat source(s) on a platform adjusts the gap or spacing G between the heat source(s) and the product "P" supported on the support surface 230. The temperature of the product varies according to the distance between the heat source and the product, as well as the temperature of the heat source. Increasing the distance from the heat source to the product will decrease the temperature of the product while decreasing the distance from the heat source to the product will increase the temperature of the product (if the temperature of the heat source remains constant). As noted above, the wavelength of radiant energy emitted from a heat source can be increased and decreased by decreasing and increasing, respectively, the temperature of the heat source. Accordingly, the temperature of the product "P" within a heating zone and the wavelength of radiant energy absorbed by the product within that heating zone can be independently controlled by adjusting the temperature of the heat source(s) and the distance between the heat source(s) and the product.

The controller 250 can be configured to continuously monitor the temperature of the product (and/or other characteristics of the product) via sensors 281, 282, 283 and the temperature of the heat sources via the thermocouples 314 and to automatically adjust the vertical position of the heat sources and/or the temperature of the heat sources to maintain a predetermined temperature profile for the product and a predetermined wavelength of radiant energy in each heating zone. In order to determine the wavelengths of radiant energy from the heat sources, the controller 250 can include an algorithm or look-up table that is used by the controller to determine the wavelength corresponding to each heat source based on the temperature readings of the thermocouples 314 that are relayed to the controller.

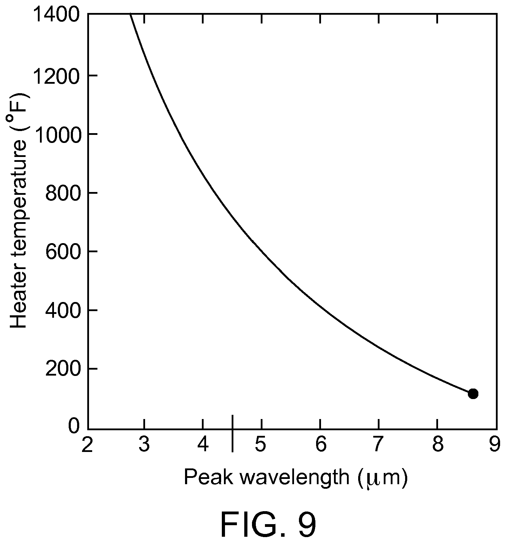

In one implementation, the wavelength of a heat source can be determined by measuring the temperature of the heat source and calculating the wavelength using Wien's law (λmax = b/T, where λmax is the peak wavelength, b is Wien's displacement constant and T is the temperature of the heat source). In another implementation, the wavelength of a heat source can be determined by measuring the temperature of the heat source and identifying the corresponding peak wavelength of the heat source on a graph, such as illustrated in FIG. 9. Alternatively, the dryer can include wavelength sensors (as discussed above) that directly monitor the wavelengths of radiant energy from each heat source and relay signals to the controller.

The controller 250 can be in communication with a plurality of control devices 233 (FIG. 4) that control the temperatures of the heating elements in each zone. Desirably, a control device 233 is provided for each zone of the dryer. For example, the control devices 233 can be solid state relays that modulate electric current to the heating elements by employing an "on/off' control scheme. More desirably, the control devices 233 comprise phase angle control modules that can increase or decrease the temperature of the heating elements by varying the voltage to the heating elements. Each phase angle control module 233 is in communication with the controller 250 and, based on signals received from the controller, varies the input voltage to the heating elements of a respective zone in order to raise or lower the operating temperature of the heating elements. The use of phase angle control modules 233 is advantageous in that it allows precise control over the operating temperatures of the heating elements in order to better achieve the desired product temperature profile.

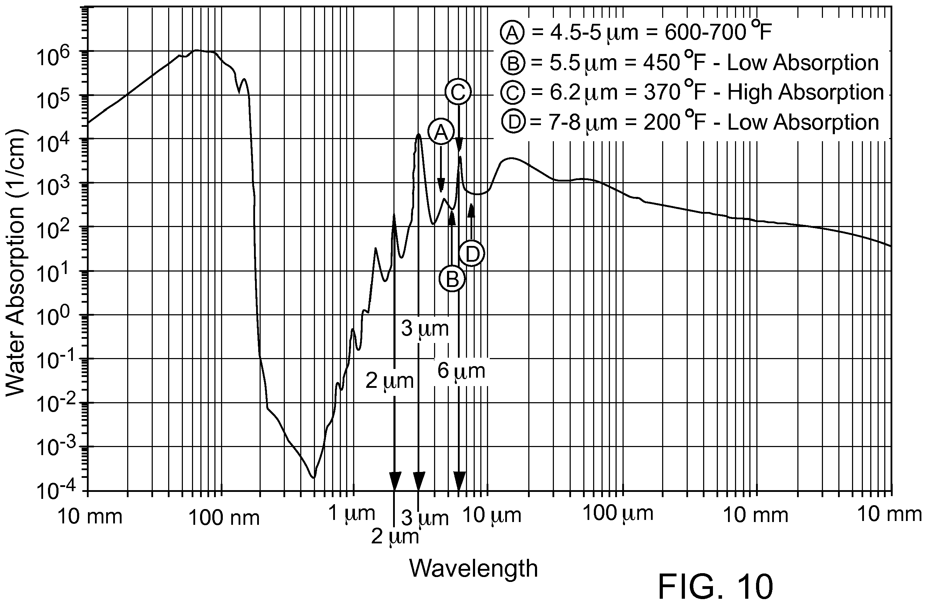

The wavelength of infrared waves emitted from the heat sources in each zone can be selected based on the desired heating and drying characteristics for a particular product in a particular stage of drying as well as various product characteristics, such as the emissivity and the ability to absorb radiant heat. For example, the wavelength in each heating zone can be selected to maximize the radiant energy absorption rate in each heating zone for a particular product. FIG. 10 shows the absorption of electromagnetic radiation by water. In the infrared range, there is a peak at about 3 µm and at about 6.2 µm. In one specific implementation, it may be desirable to maintain a constant wavelength throughout the drying process at 3 or 6.2 µm for optimum absorption of the IR energy by the water in the product being evaporated. Because the moisture content of product applied to the support surface 230 varies as does the moisture in the product as it moves through each heating zone (as well as other product characteristics), the amount of heat required to achieve a desired product temperature in each zone can vary substantially. Consequently, the positions of the heat sources can be automatically adjusted to maintain a predetermined constant wavelength and a predetermined temperature profile. Moving the heaters produces a constant wavelength to compensate for changes in moisture content in the product during drying, and to compensate for different desired product temperature set-points in each drying zone (i.e., the desired drying temperature profile, which can vary for different products). In some cases it may be desirable to operate some heat sources at 3 µm in some drying zones (such as in the early zones where relatively higher temperatures are needed) and at 6.2 µm in other drying zones (such as in zones towards the end of the dryer where relatively lower temperatures are needed). In this manner, the specific wavelength (3 or 6.2 µm) for each zone can be selected based on whether the zone has any specific temperature limitations or requirements.

In other implementations, it may be desirable to change the wavelength in each successive zone for one or more reasons. For example, the emissivity of the product as a whole may change as it proceeds through the drying process. As such, the wavelength in each heating zone can be selected to maximize absorption of radiant energy by the product as the emissivity of the product changes during the drying process. As another example, the wavelength in each heating zone can be selected to achieve a desired degree of penetration of radiant waves into the product or to compensate for changes in thickness of the product layer as it dries. Moreover, the sensitivity of the product (or a particular compound in the product) to a particular wavelength of IR may increase as the product moves through the dryer. Thus, the wavelength in each heating zone can be selected to avoid damage to the product or particular compounds in the product.

The following describes one specific approach for operating the dryer 200A to dry a product using a predetermined wavelength of IR. As noted above, infrared wavelengths of about 3 microns and 6.2 microns generally produce the best radiant energy absorption rate for water. Thus, the controller 250 can be programmed to control the temperature of the heat sources in each heating zone to produce infrared waves at, for example, 3 microns (or alternatively, 6.2 microns) across all heating zones. To maintain a predetermined temperature profile for the product, the controller 250 monitors the temperature of the product and continuously adjusts the spacing between the heat sources and the product as needed to maintain the desired temperature of the product within each zone. As discussed above, for drying certain products it is desirable to maintain a constant product temperature across zones Z1, Z2, Z3. Since the moisture content of the product decreases as the product moves through each zone, less heat is needed in each successive zone to maintain the desired product temperature. As such, the heat sources in the first control zone Z1 typically are closer to the product than the heat sources in the second control zone Z2, which typically are closer to the product than the heat sources in the third control zone Z3, as depicted in FIG. 5. As can be appreciated, the heat sources can operate at constant, or substantially constant operating temperatures, and the controller can cause the positions of the heat sources to move upwardly or downwardly to vary the amount of heat reaching the product. An advantage of operating the heat sources at constant or substantially constant operating temperatures is that the heat sources can be operated at constant or substantially constant power supply and voltage, which can significantly increase the energy efficiency of the dryer.

An alternative control scheme for operating drying apparatus 200A is illustrated in the flowchart shown in FIG. 7 and can operate in the following manner. When the dryer is initially started and product is first applied to the support surface 230, the heat sources are in a starting position (usually, but not necessarily, all of the heat sources are at the same vertical position). Referring to FIG. 7, the controller first reads the product temperature (402) and adjusts the operating temperatures of the heat sources accordingly to achieve the desired product temperature in each heating zone (404 and 406). If the product temperature is at the predetermined setpoint for the product in a particular zone, then the controller reads the operating temperature of the heat sources and determines the wavelength produced by the heat sources in that zone (408 and 410). Alternatively, the wavelength in the heating zone can be determined from signals relayed to the controller from a spectrometer, radiometer, or equivalent device.

If the wavelength in a particular zone is greater or less than a predetermined wavelength, the controller controls the heat sources in that zone to move farther away from or closer to the product (412 and 414). More specifically, if the measured wavelength is greater than the predetermined wavelength, then the controller causes the heat sources to move farther away from the product, and if the measured wavelength is less than the predetermined wavelength, then the controller causes the heat sources to move closer to the product. As the heat sources move farther away from or closer to the product, the product temperature may begin to decrease or increase, respectively. Consequently, the process loop starts over at block 402 where the controller reads the product temperature and increases or decreases the operating temperature of the heat sources until the predetermined product temperature is again achieved. At this point, the controller again determines the wavelength produced by the heat sources (408 and 410) and causes the heat sources to move even farther away from or closer to the product if the wavelength is still greater or less than the predetermined wavelength for that zone (412 and 414). This process loop is repeated until the heat sources produce energy at the predetermined wavelength. At this point, the controller again determines the product temperature (402 and 404), adjusts the operating temperature of the heat sources as needed to maintain the predetermined product temperature (406), and then compares the measured wavelength to the predetermined wavelength (410 and 412) and moves the heat sources if the measured wavelength is greater or less than the predetermined wavelength (414).

When the controller determines that the heat sources in a zone should be moved (either upwardly or downwardly), the heat sources can be moved in small, predetermined increments at block 414. After each incremental movement, the controller reads the product temperature (402), increases or decreases the operating temperature of the heat sources to achieve the predetermined product temperature (406), and once the predetermined product temperature is achieved (404), the controller determines the wavelength produced by the heat sources (408 and 410), and then causes the heat sources to move another increment if the wavelength is longer or shorter than the predetermined wavelength (414).

The manner of operating the dryer illustrated in FIG. 7 can improve the responsiveness of the dryer (i.e., the ability of the system to increase or decrease the amount of heat applied to the product as needed to avoid overheating or underheating the product) compared to a control scheme where the heating elements are maintained at a constant temperature and are raised and lowered to adjust the amount of heat applied to the product. The method shown in FIG. 7 therefore includes two feedback loops, namely, a first feedback loop that adjusts the temperature of the heating elements in response to sudden changes that necessitate an immediate increase or decrease in the amount of heat applied to the product, and a second feedback loop that adjusts the positions of the heating elements until the targeted wavelength is achieved at the optimum product temperature. A variety of process characteristics vary during the drying process and can cause a demand for a sudden increase or decrease in the amount of heat that must be applied to the product in order to maintain the targeted temperature profile of the product. Some of these characteristics include the moisture and solids content of product applied to the conveyor, the initial product temperature, the rate and thickness of product applied to the conveyor, and ambient conditions (temperature and relative humidity). Operating two feedback loops in the manner described allows the operating temperatures of the heating elements to be increased and decreased quickly in order to respond to a demand for an increase or decrease in the amount of heat applied to the product so as to avoid overheating or underheating the product.

In another implementation, the controller 250 can be programmed to increase and decrease the temperature of a heat source within a predetermined temperature range that corresponds to an acceptable wavelength spectrum prior to adjusting the position of the heat source. For example, the controller 250 can monitor product temperature and adjust the temperature of a heat source within a predetermined range as is needed to maintain the temperature profile. If the temperature of the heat source exceeds or drops below the predetermined range, the controller can then move the heat source closer to or farther away from the product as needed to maintain the temperature profile for the product. This manner of operating the dryer allows for very rapid responses from the heat sources to changes in the amount of heat required to achieve a desired product temperature in each drying zone. Explaining further, a target temperature is selected for each heater to achieve a desired wavelength, but in order to respond rapidly, the temperature of the heater is varied within a specified and limited range within an acceptable band of wavelengths. This allows the heat sources to respond rapidly to small, real time changes in in the product being dried, such as changes in moisture content or product thickness that may occur frequently, thereby avoiding overheating or underheating of the product.

As illustrated, the controller 250 operates in a first feedback loop to control the temperature of the heat sources and in a second feedback loop to control the spacing of the heat sources relative to the product. In alternative embodiments, the temperature of the heat sources and their positions relative to the product can be manually adjusted by an operator. For example, the operator can monitor the various operating parameters of the process (product temperature, heat source temperature, etc.) and make adjustments to one or more of the operating parameters by inputting the information into the keypad 269, which information is relayed to the controller 250.

The drying apparatus 200A is described in the context of drying a thin layer of liquid product, such the mixtures containing fruit and vegetable liquids described above.

The following factors can affect a dryer's ability to control the wavelength and product temperature within a control zone: (i) the range of adjustment of heating elements towards and away from the support surface of the conveyor belt; (ii) the watt density of the heating elements; (iii) spacing between heating elements; and (iv) the reflector configuration of the heating elements. These features can be optimized within each control zone to maximize dryer capacity and product quality.

If a heating element is too close to the conveyor (e.g., closer than the spacing between individual heating elements), hot/cold areas on the conveyor belt can result if the radius of infrared beams from adjacent heating elements do not overlap as the infrared energy is projected onto the belt. Thus, the minimum distance between the heating elements and the conveyor should be at least equal to or greater than the spacing between individual heating elements. A heating element that is too far away from the conveyor belt will require a relatively high amount of energy to achieve the product temperature at a given wavelength due to the fact that energy density decreases as the square of the distance between the heating element and the conveyor.

The watt density of a heating element can be expressed in joules per second (watts) per centimeter (inch) of the length of the heating element. If the watt density of a heating element is too high, then the heating elements will have to be located very far from the belt to maintain a heater temperature to emit the desired wavelength for a given product temperature. If the watt density of a heating element is too low, then the heating element may need to be too close to the belt, creating hot and cold spots and/or the heating element may not achieve the heater temperature required to achieve the desired wavelength. In order to account for changes in moisture content of the product during drying, the heater watt density and spacing between individual heating elements can be selected based on the moisture content range anticipated in a particular zone, and the anticipated wattage required based on the thermal capacity of the product (Q=mCp(T1-T2)) as well as the amount of water vapor produced (2326 kJ/kg (1000 BTU/lb.) of steam).

Quartz heaters can be clear or frosted and can include a reflector directly on the element or some distance behind the element. For example, each heater support 302, 304, 306, 308 (FIG. 6) can include a reflector (e.g., a metal pan) positioned below the heating elements supported by the heater support. Heating elements with a reflector on the element itself will have a relatively higher element temperature at the same conditions due to reflection of the bottom infrared directly back at the element itself, resulting in a higher temperature and shorter wavelength at the same power setting compared to a heating element that has a reflector that is positioned below the heating element. If the reflector is below the heating element, more of the initial infrared waves can be reflected around the element. The advantage of reflecting around the element is that there can be a more even distribution of infrared onto the belt, especially in a zone where the heating elements are relatively close to the belt due high removal rate of water (high heat of vaporization). On the other hand, reflectors on the heating elements would be more favorable in control zones where the heaters need to be relatively further away from the belt so as to reduce the maximum distance of the heating elements from the belt, thereby reducing the amount of energy required to achieve the desired wavelength.

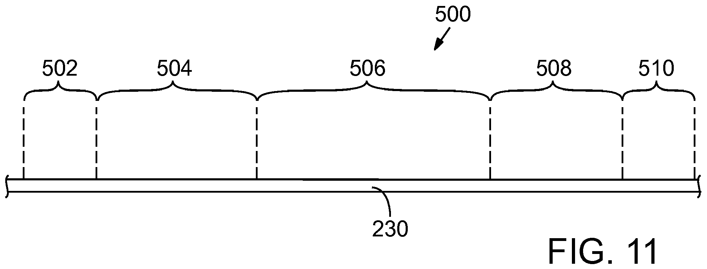

The selection of heater adjustment range, watt density, heater spacing, and reflector configuration can be further explained with reference to FIG. 11. FIG. 11 shows a schematic illustration of a dryer 500 for drying fruit and vegetable liquids (although it can be used for drying other substances). The dryer 500 comprises five main dryer sections 502, 504, 506, 508, and 510. Each dryer section can include one or more control zones. Typically, each control zone comprises a plurality of infrared heating elements (also referred to as infrared emitters or infrared lamps). Within each dryer section, there can be movable heater supports (e.g., 302, 304, 306, 308) that support the heating elements of one control zone, heater supports that support the heating elements of more than one control zone, or a combination of heater supports that support the heating elements of one control zone and heater supports that support the heating elements of more than one control zone. The length of the control zones (in the direction of movement of the conveyor) as well as the length of the movable heater supports can vary along the length of the dryer, for example between 3.3 m (one foot) and 33 m (10 feet). Generally speaking, shorter control zones and shorter heater supports can provide more precise control over product temperature and can be more responsive to changes in thermal properties of the product due to loss of moisture. In particular instances, the first dryer section 502 extends about 10% of the overall dryer length; the second dryer section 504 extends about 25% of the overall dryer length; the third dryer section 506 extends about 35% of the overall dryer length; the fourth dryer section 508 extends about 20% of the overall dryer length; and the fifth dryer section 510 extends about 10% of the overall dryer length.

The first dryer section 502 is a "ramp-up" section of the dryer in which the product temperature is increased in a short amount of time to an optimum temperature for most efficient evaporation for the product. In this dryer section, the control zones can be relatively short to increase the product temperature as quickly as possible while avoiding overheating. In particular embodiments, the watt density of the heating elements in this dryer section are in the range of about 8-32 J·s⁻¹·cm⁻¹ (20-80 watts/inch), with 20 J·s⁻¹·cm⁻¹ (50 watts/inch) being a specific example. Heater spacing (distance between individual heating elements) is in the range of about 1.3 cm (0.5 inch) to about 13 cm (5.0 inches), with 5.1 cm (2.0 inches) being a specific example. The length of each control zone is in the range of about 15 cm (6 inches) to about 152 cm (60 inches) with 76 cm (30 inches) being a specific example (each zone having about 15 heating elements). The length of each movable heater support is in the range of about 15 cm (6 inches) to about 152 cm (60 inches), with 76 cm (30 inches) being a specific example. In a specific implementation, each movable heater support can support the heating elements of one control zone (such as shown in FIG. 5). The distance between the heating elements and the conveyor 230 within the first dryer section 502 can be adjusted between about 1.3 cm (0.5 inch) and 13 cm (5.0 inches), with 5.1 cm (2.0 inches) being a specific operating distance. Reflectors mounted below the heating elements can be used in this dryer section.

The second dryer section 504 is a high evaporation section in which the moisture content is initially high, and the product is maintained at an efficient temperature for moisture evaporation. In this section, the process is generally at a steady state evaporating a large amount of moisture with little effect on product temperature. Accordingly, the control zones can be relatively longer in this dryer section. A relatively large amount of energy is required in this dryer section. The watt density of the heating elements in this dryer section may be in the range of about 8-32 J·s⁻¹·cm⁻¹ (20-80 watts/inch), with 24 J·s⁻¹·cm⁻¹ (60 watts/inch) being a specific example. Heater spacing (distance between individual heating elements) is in the range of about 1.3 cm (0.5 inch) to about 13 cm (5.0 inch), with 5.1 cm (2.0 inch) being a specific example. The length of each control zone is in the range of about 38 cm (15 inches) to about 305 cm (120 inches), with 152 cm (60 inches) being a specific example (each zone having about 30 heating elements). The length of each movable heater support is in the range of about 38 cm (15 inches) to about 610 cm (240 inches), with 305 cm (120 inches) being a specific example. In a specific implementation, each movable heater support can support the heating elements of two control zones. The distance between the heating elements and the conveyor 230 within the second dryer section 504 can be adjusted between about 1.3 cm (0.5 inch) and 13 cm (5.0 inches), with 5.1 cm (2.0 inches) being a specific operating distance. Reflectors mounted below the heating elements can be used in this dryer section.

The third dryer section 506 is a transition section in which the product transitions into a mostly dry state and becomes very heat sensitive. Accordingly, the lengths of the control zones desirably are relatively shorter in this dryer section to respond to any fluctuations in product characteristics that affect the drying rate. The watt density of the heating elements in this dryer section may be in the range of about 8-24 J·s⁻¹·cm⁻¹ (20-60 watts/inch), with 12 J·s⁻¹·cm⁻¹ (30 watts/inch) being a specific example. Heater spacing (distance between individual heating elements) is in the range of about 1.3 cm (0.5 inch) to about 61 cm (24.0 inch), with 7.6 cm (3.0 inch) being a specific example. The length of each control zone is in the range of about 38 cm (15 inches) to about 305 cm (120 inches), with 76 cm (30 inches) being a specific example (each zone having about 10 heating elements). The length of each movable heater support is in the range of about 38 cm (15 inches) to about 610 cm (240 inches), with 76 cm (30 inches) being a specific example. In a specific implementation, each movable heater support can support the heating elements of one control zone. The distance between the heating elements and the conveyor 230 within the third dryer section 506 can be adjusted between about 1.3 cm (0.5 inch) and 61 cm (24.0 inches), and more specifically between about 10 cm (4.0 inches) to about 25 cm (10 inches). In this drying section, a combination of reflectors mounted below the heating elements and heating elements having integral reflectors can be used.

The fourth drying section 508 is a final drying section where the product initially is mostly dry and the control zones are relatively longer to remove the last moisture from the product under relatively steady state conditions. Longer control zones are desirable to maintain substantially constant drying. The watt density of the heating elements in this dryer section may be in the range of about 8-32 J·s⁻¹·cm⁻¹ (20-80 watts/inch), with 24 J·s⁻¹·cm⁻¹ (60 watts/inch) being a specific example. Heater spacing (distance between individual heating elements) is in the range of about 1.3 cm (0.5 inch) to about 13 cm (5.0 inch), with 10 cm (4.0 inch) being a specific example. The length of each control zone is in the range of about 152 cm (60 inches) to about 305 cm (120 inches), with 229 cm (90 inches) being a specific example (each zone having about 22 heating elements). The length of each movable heater support is in the range of about 38 cm (15 inches) to about 610 cm (240 inches), with 305 cm (120 inches) being a specific example. In a specific implementation, some of the movable heater supports can support the heating elements of one control zone while other movable heater supports can support the heating elements of two control zones. The distance between the heating elements and the conveyor 230 within the fourth dryer section 508 can be adjusted between about 1.3 cm (0.5 inch) and 51 cm (20.0 inches), with 41 cm (16 inches) being a specific operating distance. Heating elements having integral reflectors can be used in this drying section.

The fifth drying section 510 is an exit or "ramp-down" section where the control zones can be relatively short to reduce the product temperature for annealing and/or to avoid overheating a particularly heat sensitive product. The watt density of the heating elements in this dryer section may be about 4 J·s⁻¹·cm⁻¹ (10 watts/inch). Heater spacing (distance between individual heating elements) is in the range of about 1.3 cm (0.5 inch) to about 13 cm (5.0 inch), with 7.6 cm (3.0 inch) being a specific example. The length of each control zone is in the range of about 152 cm (60 inches) to about 305 cm (120 inches), with 76 cm (30 inches) being a specific example (each zone having about 10 heating elements). The length of each movable heater support is in the range of about 38 cm (15 inches) to about 305 cm (120 inches), with 76 cm (30 inches) being a specific example. In a specific implementation, each movable heater support can support the heating elements of one control zone. The distance between the heating elements and the conveyor 230 within the fifth dryer section 510 can be adjusted between about 1.3 cm (0.5 inch) and 38 cm (15.0 inches), with 25.4 cm (10 inches) being a specific operating distance. Heating elements having integral reflectors can be used in this drying section.

In a specific implementation, a dryer 500 has an overall length of about 328 m (100 feet). The first dryer section 502 has four control zones, each of which is about 76 cm (30 inches) in length and is mounted on a respective movable heater support. The second dryer section 504 has five control zones, each of which is about 150 cm (60 inches) in length, and ten movable heater supports, each supporting two control zones. The third dryer section 506 has fourteen control zones, each of which is about 76 cm (30 inches) in length and is mounted on a respective movable heater support. The fourth dryer section 508 has three control zones, each of which is about 230 cm (90 inches) in length. The fourth dryer section 508 can include movable heater supports that support one control zone and heater supports that support more than one control zone. The fifth dryer section 510 has four control zones, each of which is about 76 cm (30 inches) in length and is mounted on a respective movable heater support.

### V. Commercial Applications

A powder comprising 40-99.9% (w/w) dried plant-derived product, 0-60% (w/w) exogenous disaccharide, and ≤ 5% (w/w) water may be packaged into single-serving packets. In some instances, a single-serving packet includes sufficient powder to provide at least one serving of a fruit (7-35 g of dried fruit) and/or a vegetable (3-35 g of dried vegetable) as previously defined. A packet may include 7-90 g of a powder comprising 40-99.9% (w/w) dried fruit, 0-60% (w/w) exogenous disaccharide, and ≤ 5% (w/w) water. In one instance, a packet may include 8-90 g of a powder comprising 40-90% (w/w) dried fruit, 10-60% (w/w) exogenous disaccharide, and ≤ 5% (w/w) water. In another instance, a packet may include 3-90 g of a powder comprising 40-99.9% (w/w) vegetable, 0-60% (w/w) exogenous disaccharide, and ≤ 5% (w/w) water. In yet another instance, a packet may include 4-90 g of a powder comprising 40-90% (w/w) dried vegetable, 10-60% (w/w) exogenous disaccharide, and ≤ 5% (w/w) water.

A person of ordinary skill in the art will understand that, as the percentage of dried fruit/vegetable in the powder increases, the amount of powder that provides a serving size of fruit/vegetable decreases. For example, a serving size of a powder comprising 40% (w/w) dried fruit is 18-93 g, whereas a serving size of a powder comprising 90% (w/w) dried fruit is 8-40 g.

In another instance, a powder comprising 40-90% (w/w) dried fruit/vegetable, 10-60% (w/w) exogenous disaccharide, and ≤ 5% (w/w) water is packaged in bulk, *i.e*., packaged in a quantity sufficient to provide more than one serving of a fruit or vegetable. The package may include a measuring device, such as a scoop or a spoon, appropriately sized to measure out a single serving of the powder.

In other instances, a powder comprising 40-90% (w/w) dried plant-derived product, 10-60% (w/w) exogenous disaccharide, and ≤ 5% (w/w) water can be mixed with other dry ingredients known in the food and beverage industry to form drink mixes and other products. In still other instances, a powder comprising 40-90% (w/w) dried plant-derived product, 10-60% (w/w) exogenous disaccharide, and ≤ 5% (w/w) water can be used for making supplements or nutraceuticals, which can be provided, *e.g*., in capsules containing the powder and any additional ingredients.

### VI. Examples

Fruit samples were prepared and dried as shown in Table 3. Some samples included a blend of fruit purees and/or juices. Other samples included a single fruit, which was prepared as a puree, a juice, or a blend of puree and juice. In some cases, 30% or 50% of an exogenous disaccharide (sucrose (SU) or trehalose (TR)) was added to the fruit before drying. The disaccharide was either mixed directly into the fruit sample, or dissolved in hot water before adding it to the fruit sample. In one case (sample #5), 25% maltodextrin was also added; maltodextrin is used in other processes to mitigate powder clumping. Samples were dried as described herein, and then rapidly or slowly annealed (*i.e*., cooled) to room temperature. The rapidly annealed samples were cooled over a time period of 9 minutes. The slowly-annealed samples were cooled over a time period roughly 3X longer than the rapidly annealed samples by lowering temperatures stepwise in later dryer zones. Unless otherwise indicated, dried samples included ≤ 2% (w/w) moisture. In Table 3, samples with a "drying condition" shown as 3% or 1.5% moisture were rapidly annealed.

Dried products were packaged in 50 g, 350 g, and 5 kg sample sizes for shelf-life testing. Each sample was packaged in two bags. The inner bag was a zipper-locked polyethylene bag with a thickness of 6.0 mil. The outer bag was a polyester film laminated with aluminum foil with a total thickness of 5.0 mil and a foil layer thickness of 0.00035 mil. The outer bag is designed to protect against moisture (water vapor transmission rate is 0.0006 g/645 cm²/24 hours), and oxygen (O₂ transmission rate is 0.0006 cm³/645 cm²/ 24 hours). Packaged samples were stored at room temperature (21.1 °C, 25% relative humidity) or at an elevated temperature (32.2 °C / 20% relative humidity).

The dried products were evaluated for solubility after storage for 7 days, 14 days, 30 days, 90 days, 182 days, and 365 days at the indicated temperature. Solubility/dispersibility was evaluated by adding 15 g of dried product to a flask containing 300 ml H₂O (at 21 °C), and shaking the flask until the product was substantially completely dispersed in the water. The number of shakes required for dispersibility was counted. The results were assigned a value on a scale of 1-5, with 1 representing dispersibility in ≤ 20 shakes, 2 representing dispersibility in 21-40 shakes, etc. The dried products were also evaluated to determine how long the powders remained flowable under the indicated storage conditions.

A comparison of samples 1 and 2 demonstrates that addition of 30% sucrose to the grape/blueberry blend improved flowability shelf life of the product at both ambient and hot storage temperatures. However, increasing the sucrose content from 30% to 50% did not further improve product shelf life (samples 2 and 3). Addition of 30% sucrose also improved flowability shelf life of a strawberry, pomegranate, black currant blend (samples 9 and 10); the results were more pronounced for the samples stored at 32 °C.

When drying conditions were changed from rapid annealing to slow annealing, a decrease in flowability shelf life was seen (see, *e.g*., samples 3, 4 and samples 11, 12). The changes were more pronounced when the products were stored at a higher temperature. This result was unexpected. Without wishing to be bound by a particular theory of operation, the cooling rate may affect crystal formation (*e.g*., sugar crystal formation) in the product. For example, rapid cooling may produce many small crystals whereas slow cooling may produce fewer, larger crystals. The increased number of crystals produced by rapid cooling may result in a powder that remains flowable over a longer period of time.

Maltodextrin, 25%, was added to sample 5 before the sample was dried. The maltodextrin produced no improvement in flowability shelf life at 21 °C. Nor was there any improvement for the larger sample sizes stored at 32 °C. These results were unexpected since maltodextrin, an oligosaccharide, is known to mitigate powder clumping in other processes.

In some instances, premixing the disaccharide with hot water to prepare a disaccharide solution, and then adding the disaccharide solution to the fruit significantly improved flowability shelf life when stored at 32 °C compared to samples where solid disaccharide was directly mixed into the fruit (see, *e.g*., samples 7, 8). In other cases, no significant difference was observed (see, *e.g*., samples 13, 14 and samples 15, 16).

Evaluation of raspberry puree samples showed that the final moisture content (1.5% vs. 3%) had a significant effect on flowability shelf life (samples 17 and 18). The drier product had a much improved shelf life at both 21 °C and 32 °C. As juice was added to the puree, the flowability shelf life decreased as expected. However, addition of 30% sucrose mitigated the decrease, particularly at 21 °C. Addition of 30% sucrose to pure juice resulted in a product that remained flowable for 7 days when stored at 32 °C and 365 days when stored at 21 °C (sample 22).

Blueberry samples (samples 24 and 25) confirmed the moisture results found with raspberry samples. As juice was added to the puree (samples 26 and 27), the flowability shelf life decreased relative to the product made from 100% puree.

Pure blueberry purees and pure strawberry purees produced powders having good flowability shelf life without the addition of disaccharides or drying aids (*e.g*., maltodextrin). Without wishing to be bound by any particular theory of operation, the powders may have good stability due to the drying process, which produces smooth particles (in contrast to coarse spray-dried and vacuum freeze-dried products), and due to the high fiber content of those fruits (with the skins).

Solubility/dispersion was excellent to good for all products. The addition of disaccharide slightly improved dispersion. Because the particles dried by embodiments of the disclosed process are flat and smooth, there is less surface area to wet than a vacuum-dried (*e.g*., freeze-dried) or spray-dried particle. Thus, there is less surface area that needs to be saturated and less surface tension, resulting in improved powder solubility/dispersion.

Disclosed compositions include a dispersion comprising 40-90% (w/w) plant-derived product and 10-60% (w/w) exogenous disaccharide, and water, wherein the composition comprises ≤ 5% (w/w) water, such as ≤ 2% (w/w) water. The plant-derived product may comprise solids obtained from a fruit puree, a vegetable puree, a fruit juice, a vegetable juice, a nectar-derived product, a sap-derived product, or any combination thereof. In any or all of the above embodiments, the plant-derived product may further include natural color and/or natural flavor derived from a fruit, a vegetable, or a combination thereof. In any or all of the above instances, the fruit, vegetable, nectar, sap, or combination thereof may comprise ≤ 6% (w/w) endogenous disaccharide.

The exogenous disaccharide may be sucrose, trehalose, or a combination thereof.

The claimed composition comprises a plurality of particles having an average largest dimension of ≤ 7 mm, such as an average largest dimension of 0.1-2 mm. In some embodiments, the particles have a smooth outer surface, a flattened morphology, or a smooth outer surface and a flattened morphology. In any or all of the above embodiments, each particle in the plurality of particles may have a substantially similar composition. In any or all of the above instances, the composition may consist essentially of the plant-derived product, exogenous disaccharide; water.

In any or all of the above instances, the composition may further include ≤ 5% (w/w) flowability agent. In some instances, the flowability agent is silicon dioxide, tricalcium phosphate, or a combination thereof. In any or all of the above instances, the composition may consist essentially of the plant-derived product exogenous disaccharide, flowability agent, and ≤ 5% (w/w) water.

In any or all of the above embodiments of the invention, the composition may have a shelf life of at least one month when stored at 20-25 °C.

Disclosure of a product include an amount of a powder comprising a plurality of particles, each particle comprising (i) 40-90% (w/w) plant-derived product, wherein the plant-derived product comprises solids obtained from a fruit puree, a vegetable puree, a fruit juice, a vegetable juice, or a combination thereof, (ii) 10-60% (w/w) exogenous disaccharide, and (iii) ≤ 5% (w/w) water; and a packaging material containing the powder. In some embodiments of the invention, the plant-derived product further comprises natural color and/or natural flavor obtained from a fruit, a vegetable, or a combination thereof. In the claimed compositions, the water content is ≤2% (w/w). In any or all of the above instances, the powder may consist essentially of the plant-derived product, exogenous disaccharide, and water, and the powder has a water content ≤2% (w/w).

In any or all of the above instances, the powder may further include ≤ 5% (w/w) flowability agent. In some instances, the powder consists essentially of the plant-derived product, exogenous disaccharide, flowability agent, and water, and the powder has a water content ≤ 2% (w/w).

In any or all of the above embodiments of the invention the amount of powder may be sufficient to provide at least one serving of fruit, vegetable, fruit juice, vegetable juice, or combination thereof. In some embodiments, the particles comprise solids of at least one fruit, and the amount of the powder is 8 g to 90 g. In some embodiments, the particles comprise solids of at least one vegetable, and the amount of the powder is 4 g to 90 g.

In any or all of the above embodiments of the invention, the amount of the powder may be sufficient to provide one serving having a nutrient content in the range of 90-100% of a nutrient content of one serving of a corresponding fresh fruit, fresh vegetable, fruit juice, or combination thereof.

In any or all of the above embodiments of the invention, the product may have a shelf life of at least one month when stored at 20-25 °C.

In one instance, a composition consists essentially of 95-99.9% plant-derived product, wherein the plant-derived product is (i) solids of at least one fruit puree or vegetable puree, (ii) solids of at least one fruit juice or vegetable juice, and optionally (iii) natural color and/or natural flavor obtained from a fruit, a vegetable, or a combination thereof; and .1-5% (w/w) water, wherein the composition comprises a plurality of particles having an average largest dimension of ≤ 7 mm. In some embodiments of the invention, the particles have a flattened morphology, a smooth outer surface, or a flattened morphology and a smooth outer surface. In any or all of the above embodiments of the invention, the particles may have an average largest dimension of 0.1-2mm. In any or all of the above embodiments, the plant-derived product may comprise solids obtained from a blend comprising 50-90% (w/w) puree and 10-50% (w/w) juice.

In one instance, composition consists essentially of 90-99.9% plant-derived product, wherein the plant-derived product is (i) solids of at least one fruit puree or vegetable puree, (ii) solids of at least one fruit juice or vegetable juice, and optionally (iii) natural color and/or natural flavor obtained from a fruit, a vegetable, or a combination thereof; ≤ 5% (w/w) flowability agent; and .1-5% (w/w) water, wherein the composition comprises a plurality of particles having an average largest dimension of ≤ 7 mm.

Disclosures of a method for making the disclosed compositions include providing at least one plant-derived product in the form of a puree, a juice, a syrup, a nectar, or any combination thereof; adding an amount of an exogenous disaccharide to the plant-derived product to produce a mixture, wherein the amount of exogenous disaccharide is in the range of 10% to 60% by weight of solids in the plant-derived product; heating the mixture for a period of time sufficient to reduce a water content of the mixture; and cooling the mixture, thereby producing a dried composition comprising ≤ 5% (w/w) water. In the claimed compositions, the dried compositions has ≤ 2% (w/w) water. The exogenous disaccharide used in the claimed method is sucrose, trehalose, or a combination therof. In any or all of the above instances, the at least one plant-derived product may include ≤ 6% (w/w) endogenous disaccharide.

The claimed method includes blending the plant-derived product and the trehalose and/or sucrose to produce a homogenous mixture before heating the mixture. In any or all of the above embodiments of the invention, the method may further include pre-heating the mixture to a temperature sufficient to dissolve the disaccharide in the mixture before heating the mixture to reduce the water content. In any or all of the above embodiments, the method may further include dissolving the exogenous disaccharide in water before adding the exogenous disaccharide to the plant-derived product. In any or all of the above embodiments, if the plant-derived product comprises a puree, the method may include reducing an average particle size in the puree to less than 50 µm before heating the mixture to reduce the water content. In any or all of the above instances, the method may include adding ≤ 5% (w/w) of a flowability agent to the dried composition.

The claimed method includes comminuting the dried mixture to produce particles having an average largest dimension ≤ 7 mm. After comminution, the particles may have a smooth outer surface, a flattened morphology, or a smooth outer surface and a flattened morphology.

Disclosures of a method for making certain of the disclosed compositions include providing a blend comprising at least one plant-derived puree and at least one plant-derived juice; heating the blend for a period of time sufficient to reduce a water content of the blend; and cooling the blend, thereby producing a dried composition comprising ≤ 5% (w/w) water. In some embodiments, the blend comprises 50-90% (w/w) puree and 10-50% (w/w) juice. In one embodiment, the blend consists essentially of the at least one plant-derived puree, the at least one plant-derived juice, and optionally natural color and/or natural flavor obtained from a fruit, a vegetable, or a combination thereof.

In any or all of the above instances, the method may include adding a quantity of an exogenous disaccharide to the blend before heating the blend. In any or all of the above instances, the method may include adding ≤ 5% (w/w) of a flowability agent to the dried composition.
The claimed method includes comminuting the dried composition to produce particles having an average largest dimension ≤ 7 mm. In some embodiments, the comminuted particles have a smooth outer surface, a flattened morphology, or a smooth outer surface and a flattened morphology.

**TABLE 3**

| **Sample #** | **Fruit*** | **Drying Aid** | **Disaccharide content*** | **Preparation of disaccharide** | **Drying conditions** | **Powder sample** | **32 °C days flowable** | **21 °C days flowable** | **Solubility** |
|---|---|---|---|---|---|---|---|---|---|
| | **Grape (GR), Blueberry (BB) Blend** | | | | | | | | |
| 1a | 67% GR puree, 33% BB puree | none | none | none added | rapid anneal | 50 g | 7 | 365 | 1 |
| 1b | 67% GR puree, 33% BB puree | none | none | none added | rapid anneal | 350 g | 7 | 7 | 1 |
| 1c | 67% GR puree, 33% BB puree | none | none | none added | rapid anneal | 5 kg | N/A | 7 | 1 |
| | | | | | | | | | |
| 2a | 47% GR puree, 23% BB puree | none | 30% SU¹ | mixed into puree | rapid anneal | 50 g | 182 | 365 | 1 |
| 2b | 47% GR puree, 23% BB puree | none | 30% SU | mixed into puree | rapid anneal | 350 g | 7 | 365 | 1 |
| 2c | 47% GR puree, 23% BB puree | none | 30% SU | mixed into puree | rapid anneal | 5 kg | N/A | 365 | 1 |
| | | | | | | | | | |
| 3a | 33.5% GR puree, 16.5% BB puree | none | 50% SU | mixed into puree | rapid anneal | 50 g | 90 | 365 | 1 |
| 3b | 33.5% GR puree, 16.5% BB puree | none | 50% SU | mixed into puree | rapid anneal | 350 g | 7 | 365 | 1 |
| 3c | 33.5% GR puree, 16.5% BB puree | none | 50% SU | mixed into puree | rapid anneal | 5 kg | N/A | 365 | 1 |
| | | | | | | | | | |
| 4a | 33.5% GR puree, 16.5% BB puree | none | 50% SU | mixed into puree | slow anneal | 50 g | 7 | 365 | 1 |
| 4b | 33.5% GR puree, 16.5% BB puree | none | 50% SU | mixed into puree | slow anneal | 350 g | 7 | 365 | 1 |
| 4c | 33.5% GR puree, 16.5% BB puree | none | 50% SU | mixed into puree | slow anneal | 5 kg | N/A | 182 | 1 |
| | | | | | | | | | |
| 5a | 16.5% GR puree, 8.5% BB puree | 25% MD² | 50% SU | mixed into puree | slow anneal | 50 g | 182 | 365 | 1 |
| 5b | 16.5% GR puree, 8.5% BB puree | 25% MD | 50% SU | mixed into puree | slow anneal | 350 g | 7 | 365 | 1 |
| 5c | 16.5% GR puree, 8.5% BB puree | 25% MD | 50% SU | mixed into puree | slow anneal | 5 kg | N/A | 365 | 1 |
| | | | | | | | | | |
| 6a | 47% GR puree, 23% BB puree | none | 30% TR³ | mixed into puree | rapid anneal | 50 g | 182 | 365 | 1 |
| 6b | 47% GR puree, 23% BB puree | none | 30% TR | mixed into puree | rapid anneal | 350 g | 14 | 365 | 1 |
| 6c | 47% GR puree, 23% BB puree | none | 30% TR | mixed into puree | rapid anneal | 5 kg | N/A | 365 | 1 |
| | | | | | | | | | |
| 7a | 33.5% GR puree, 16.5% BB puree | none | 50% TR | mixed into puree | rapid anneal | 50 g | 14 | 365 | 1 |
| 7b | 33.5% GR puree, 16.5% BB puree | none | 50% TR | mixed into puree | rapid anneal | 350 g | 14 | 365 | 1 |
| 7c | 33.5% GR puree, 16.5% BB puree | none | 50% TR | mixed into puree | rapid anneal | 5 kg | N/A | 365 | 1 |
| | | | | | | | | | |
| 8a | 33.5% GR puree, 16.5% BB puree | none | 50% TR | premixed with hot H₂O | rapid anneal | 50 g | 365 | 365 | 1 |
| 8b | 33.5% GR puree, 16.5% BB puree | none | 50% TR | premixed with hot H₂O | rapid anneal | 350 g | 365 | 365 | 1 |
| 8c | 33.5% GR puree, 16.5% BB puree | none | 50% TR | premixed with hot H₂O | rapid anneal | 5 kg | N/A | 365 | 1 |
| | | | | | | | | | |

| | **Strawberry (ST), Pomegranate (PM), Black Currant (BC) Blend** | | | | | | | | |
|---|---|---|---|---|---|---|---|---|---|
| 9a | 68% ST puree, 17% PM juice, 15% BC juice | none | none | none added | rapid anneal | 50 g | 14 | 365 | 2 |
| 9b | 68% ST puree, 17% PM juice, 15% BC juice | none | none | none added | rapid anneal | 350 g | 7 | 365 | 2 |
| 9c | 68% ST puree, 17% PM juice, 15% BC juice | none | none | none added | rapid anneal | 5 kg | N/A | 365 | 2 |
| | | | | | | | | | |
| 10a | 47.5% ST puree, 12% PM juice, 10.5% BC juice | none | 30% SU | mixed into puree | rapid anneal | 50 g | 365 | 365 | 2 |

| **Sample #** | **Fruit*** | **Drying Aid** | **Disaccharide content*** | **Preparation of disaccharide** | **Drying conditions** | **Powder sample** | **32 °C days flowable** | **21 °C days flowable** | **Solubility** |
|---|---|---|---|---|---|---|---|---|---|
| 10b | 47.5% ST puree, 12% PM juice, 10.5% BC juice | none | 30% SU | mixed into puree | rapid anneal | 350 g | 14 | 365 | 2 |
| 10c | 47.5% ST puree, 12% PM juice, 10.5% BC juice | none | 30% SU | mixed into puree | rapid anneal | 5 kg | N/A | 365 | 2 |
| | | | | | | | | | 2 |
| 11a | 34% ST puree, 8.5% PM juice, 7.5% BC juice | none | 50% SU | mixed into puree | rapid anneal | 50 g | 365 | 365 | 2 |
| 11b | 34% ST puree, 8.5% PM juice, 7.5% BC juice | none | 50% SU | mixed into puree | rapid anneal | 350 g | 30 | 365 | 2 |
| 11c | 34% ST puree, 8.5% PM juice, 7.5% BC juice | none | 50% SU | mixed into puree | rapid anneal | 5 kg | N/A | 365 | 2 |
| | | | | | | | | | |
| 12a | 34% ST puree, 8.5% PM juice, 7.5% BC juice | none | 50% SU | mixed into puree | slow anneal | 50 g | 30 | 365 | 2 |
| 12b | 34% ST puree, 8.5% PM juice, 7.5% BC juice | none | 50% SU | mixed into puree | slow anneal | 350 g | 7 | 365 | 2 |
| 12c | 34% ST puree, 8.5% PM juice, 7.5% BC juice | none | 50% SU | mixed into puree | slow anneal | 5 kg | N/A | 365 | 2 |
| | | | | | | | | | |
| 13a | 47.5% ST puree, 12% PM juice, 10.5% BC juice | none | 30% TR | mixed into puree | rapid anneal | 50 g | 365 | 365 | 2 |
| 13b | 47.5% ST puree, 12% PM juice, 10.5% BC juice | none | 30% TR | mixed into puree | rapid anneal | 350 g | 365 | 365 | 2 |
| 13c | 47.5% ST puree, 12% PM juice, 10.5% BC juice | none | 30% TR | mixed into puree | rapid anneal | 5 kg | N/A | 365 | 2 |
| 14a | 47.5% ST puree, 12% PM juice, 10.5% BC juice | none | 30% TR | premixed with hot H₂O | rapid anneal | 50 g | 365 | 365 | 2 |
| 14b | 47.5% ST puree, 12% PM juice, 10.5% BC juice | none | 30% TR | premixed with hot H₂O | rapid anneal | 350 g | 365 | 365 | 2 |
| 14c | 47.5% ST puree, 12% PM juice, 10.5% BC juice | none | 30% TR | premixed with hot H₂O | rapid anneal | 5 kg | N/A | 365 | 2 |
| | | | | | | | | | |
| 15a | 34% ST puree, 8.5% PM juice, 7.5% BC juice | none | 50% TR | mixed into puree | rapid anneal | 50 g | 365 | 365 | 2 |
| 15b | 34% ST puree, 8.5% PM juice, 7.5% BC juice | none | 50% TR | mixed into puree | rapid anneal | 350 g | 365 | 365 | 2 |
| 15c | 34% ST puree, 8.5% PM juice, 7.5% BC juice | none | 50% TR | mixed into puree | rapid anneal | 5 kg | N/A | 365 | 2 |
| | | | | | | | | | |
| 16a | 34% ST puree, 8.5% PM juice, 7.5% BC juice | none | 50% TR | premixed with hot H₂O | rapid anneal | 50 g | 365 | 365 | 2 |
| 16b | 34% ST puree, 8.5% PM juice, 7.5% BC juice | none | 50% TR | premixed with hot H₂O | rapid anneal | 350 g | 365 | 365 | 2 |
| 16c | 34% ST puree, 8.5% PM juice, 7.5% BC juice | none | 50% TR | premixed with hot H₂O | rapid anneal | 5 kg | N/A | 365 | 2 |
| | | | | | | | | | |

| | **Raspberry (RB)** | | | | | | | | |
|---|---|---|---|---|---|---|---|---|---|
| 17a | 100% RB puree | none | none | N/A | 3% moisture | 50 g | 7 | 30 | 1 |
| 17b | 100% RB puree | none | none | N/A | 3% moisture | 50 g | 7 | 30 | 1 |
| 17c | 100% RB puree | none | none | N/A | 3% moisture | 350 g | 7 | 14 | 1 |
| 17d | 100% RB puree | none | none | N/A | 3% moisture | 350 g | 7 | 14 | 1 |

| **Sample #** | **Fruit*** | **Drying Aid** | **Disaccharide content*** | **Preparation of disaccharide** | **Drying conditions** | **Powder sample** | **32 °C days flowable** | **21 °C days flowable** | **Solubility** |
|---|---|---|---|---|---|---|---|---|---|
| | | | | | | | | | |
| 18a | 100% RB puree | none | none | N/A | 1.5% moisture | 50 g | 365 | 365 | 1 |
| 18b | 100% RB puree | none | none | N/A | 1.5% moisture | 350 g | 7 | 365 | 1 |
| 18c | 100% RB puree | none | none | N/A | 1.5% moisture | 5 kg | N/A | 365 | 1 |
| | | | | | | | | | |
| 19a | 80% RB puree, 20% RB juice | none | none | N/A | rapid anneal | 50 g | 7 | 30 | 1 |
| 19b | 80% RB puree, 20% RB juice | none | none | N/A | rapid anneal | 50 g | 7 | 30 | 1 |
| 19c | 80% RB puree, 20% RB juice | none | none | N/A | rapid anneal | 350 g | 7 | 30 | 1 |
| 19d | 80% RB puree, 20% RB juice | none | none | N/A | rapid anneal | 350 g | 7 | 30 | 1 |
| 19e | 80% RB puree, 20% RB juice | none | none | N/A | rapid anneal | 5 kg | 7 | 30 | 1 |
| | | | | | | | | | |
| 20a | 56% RB puree, 14% RB juice | none | 30% SU | mixed into puree | rapid anneal | 50 g | 7 | 365 | 2 |
| 20b | 56% RB puree, 14% RB juice | none | 30% SU | mixed into puree | rapid anneal | 350 g | 7 | 365 | 2 |
| 20c | 56% RB puree, 14% RB juice | none | 30% SU | mixed into puree | rapid anneal | 5 kg | 7 | 365 | 2 |
| | | | | | | | | | |
| 21a | 50% RB puree, 50% RB juice | none | none | N/A | rapid anneal | 50 g | 7 | 30 | 1 |
| 21b | 50% RB puree, 50% RB juice | none | none | N/A | rapid anneal | 50 g | 7 | 30 | 1 |
| 21c | 50% RB puree, 50% RB juice | none | none | N/A | rapid anneal | 350 g | 7 | 14 | 1 |
| 21d | 50% RB puree, 50% RB juice | none | none | N/A | rapid anneal | 350 g | 7 | 14 | 1 |
| | | | | | | | | | |
| 22a | 70% RB juice | none | 30% SU | mixed into juice | rapid anneal | 50 g | 7 | 365 | 2 |
| 22b | 70% RB juice | none | 30% SU | mixed into juice | rapid anneal | 350 g | 7 | 365 | 2 |
| 22c | 70% RB juice | none | 30% SU | mixed into juice | rapid anneal | 5 kg | 7 | 365 | 2 |
| | | | | | | | | | |
| 23a | 70% RB puree | none | 30% SU | mixed into puree | rapid anneal | 50 g | 365 | 365 | 1 |
| 23b | 70% RB puree | none | 30% SU | mixed into puree | rapid anneal | 350 g | 7 | 365 | 1 |
| 23c | 70% RB puree | none | 30% SU | mixed into puree | rapid anneal | 5 kg | N/A | 365 | 1 |
| | | | | | | | | | |

| | **Blueberry** | | | | | | | | |
|---|---|---|---|---|---|---|---|---|---|
| 24a | 100% BB puree | none | none | N/A | 1.5% moisture | 50 g | 365 | 365 | 1 |
| 24b | 100% BB puree | none | none | N/A | 1.5% moisture | 50 g | 365 | 365 | 1 |
| 24c | 100% BB puree | none | none | N/A | 1.5% moisture | 350 g | 30 | 365 | 1 |
| 24d | 100% BB puree | none | none | N/A | 1.5% moisture | 350 g | 30 | 365 | 1 |
| 24e | 100% BB puree | none | none | N/A | 1.5% moisture | 5 kg | | | |
| | | | | | | | | | |
| 25a | 100% BB puree | none | none | N/A | 3% moisture | 50 g | 7 | 365 | 1 |
| 25b | 100% BB puree | none | none | N/A | 3% moisture | 350 g | 7 | 365 | 1 |
| 25c | 100% BB puree | none | none | N/A | 3% moisture | 5 kg | N/A | 365 | 1 |
| | | | | | | | | | |
| 26a | 50% BB puree, 50% BB juice | none | none | N/A | rapid anneal | 50 g | 7 | 30 | 1 |
| 26b | 50% BB puree, 50% BB juice | none | none | N/A | rapid anneal | 50 g | 7 | 30 | 1 |
| 26c | 50% BB puree, 50% BB juice | none | none | N/A | rapid anneal | 350 g | 7 | 30 | 1 |
| 26d | 50% BB puree, 50% BB juice | none | none | N/A | rapid anneal | 350 g | 7 | 30 | 1 |
| | | | | | | | | | |
| 27a | 80% BB puree, 20% BB juice | none | none | N/A | rapid anneal | 50 g | 7 | 90 | 1 |
| 27b | 80% BB puree, 20% BB juice | none | none | N/A | rapid anneal | 50 g | 7 | 90 | 1 |

| **Sample #** | **Fruit*** | **Drying Aid** | **Disaccharide content*** | **Preparation of disaccharide** | **Drying conditions** | **Powder sample** | **32 °C days flowable** | **21 °C days flowable** | **Solubility** |
|---|---|---|---|---|---|---|---|---|---|
| 27c | 80% BB puree, 20% BB juice | none | none | N/A | rapid anneal | 350 g | 7 | 30 | 1 |
| 27d | 80% BB puree, 20% BB juice | none | none | N/A | rapid anneal | 350 g | 7 | 30 | 1 |
| 27e | 80% BB puree, 20% BB juice | none | none | N/A | rapid anneal | 5 kg | 7 | 30 | 1 |
| | | | | | | | | | |

| | **Strawberry** | none | none | N/A | | | | | |
|---|---|---|---|---|---|---|---|---|---|
| 28a | 100% ST puree | none | none | N/A | rapid anneal | 50 g | 365 | 365 | 2 |
| 28b | 100% ST puree | none | none | N/A | rapid anneal | 50 g | 365 | 365 | 2 |
| 28c | 100% ST puree | none | none | N/A | rapid anneal | 350 g | 30 | 365 | 2 |
| 28d | 100% ST puree | none | none | N/A | rapid anneal | 350 g | 30 | 365 | 2 |
| 28e | 100% ST puree | none | none | N/A | rapid anneal | 5 kg | 30 | 365 | 2 |

| | | | | | | | | | |
|---|---|---|---|---|---|---|---|---|---|
| *Percentages are the percent solids in the final product, *e.g*., 47% GR puree, 23% BB puree, 30% sucrose indicates a final dried product including 47% (w/w) grape solids (from puree), 23% (w/w) blueberry solids (from puree), and 30% (w/w) sucrose solids. ¹SU = sucrose ²MD = maltodextrin ³TR = trehalose | | | | | | | | | |

## Claims

1. A method for making a food powder composition consisting essentially of a plant-derived product, exogenous sucrose and/or trehalose, and ≤ 2% (w/w) water, the method comprising:
providing at least one plant-derived product in the form of a puree, a juice, a nectar, or any combination thereof;
adding an amount of exogenous sucrose and/or trehalose to the plant-derived product, and blending the plant-derived product and the exogenous sucrose and/or trehalose to produce a homogenous mixture, wherein the amount of exogenous sucrose and/or trehalose is sufficient to provide a dried composition comprising the plant-derived product and 10% to 60% by weight of the exogenous sucrose and/or trehalose;
depositing a layer of the mixture onto a support that moves the mixture through a plurality of heating zones of a drying apparatus wherein heat is supplied by dry radiant heat in the form of infrared energy below the support, thereby heating the mixture to a temperature of 65°C to 90°C for a period of time sufficient to reduce a water content of the mixture;
cooling the mixture to room temperature over a time period of 2 to 10 minutes;
thereby producing a dried composition comprising ≤ 2% (w/w) water and retaining at least 90% of nutrients found in the plant-derived product before drying; and
comminuting the dried composition to produce particles having an average largest dimension of ≤ 7 mm.

2. The method of claim 1, further comprising:
a) pre-heating the mixture to a temperature sufficient to dissolve the sucrose and/or trehalose in the mixture before heating the mixture to reduce the water content; or
b) dissolving the exogenous sucrose and/or trehalose in water before adding the exogenous sucrose and/or trehalose to the plant-derived product.

3. The method of claim 1, wherein the plant-derived product comprises a puree, the method further comprising reducing an average particle size in the puree to less than 50 µm before heating the mixture to reduce the water content.

4. The method of claim 1, wherein the at least one plant-derived product comprises ≤ 6% (w/w) endogenous sucrose and/or trehalose.

5. The method of claim 1, where providing at least one plant-derived product comprises providing a blend comprising at least one plant-derived puree and at least one plant- derived juice.

6. The method of claim 1, wherein the dry radiant heat is provided by heat sources below the support, the method further comprising:
adjusting the vertical positions of the heat sources and/or the temperature of the heat sources to maintain a predetermined temperature profile for the mixture and a predetermined wavelength of radiant energy in each heating zone.

7. The method of claim 6, further comprising:
measuring the temperature of the mixture;
determining the wavelength of the radiant energy; and
adjusting the vertical positions of the heat sources and/or the temperature of the heat sources based on the measured temperature and the determined wavelength so as to maintain the predetermined temperature profile for the mixture and a predetermined wavelength of radiant energy in each heating zone.

8. The method of claim 6 or claim 7, wherein the predetermined wavelength of radiant energy is 3 microns or 6.2 microns.

9. The method of claim 1, wherein the amount of exogenous sucrose and/or trehalose is sufficient to provide a dried composition comprising the plant-derived product and 25% to 50% by weight of the exogenous sucrose and/or trehalose.

10. A food powder composition obtained by the method of any of claims 1 to 9, the food powder composition consisting essentially of:
(i) 40-90% (w/w) plant-derived product comprising solids obtained from a fruit puree, a vegetable puree, a fruit juice, a vegetable juice, a nectar-derived product, or any combination thereof;
(ii) 10-60% (w/w) exogenous trehalose, wherein the plant-derived product and exogenous trehalose form a dispersion; and
(iii) ≤ 2% (w/w) water, wherein the food powder composition retains at least 90% of nutrients found in the plant-derived product before drying, and wherein the powder composition comprises a plurality of particles having an average largest dimension of ≤ 7 mm.

11. The food powder composition of claim 10, wherein the plant-derived product further comprises natural color and/or natural flavor derived from a fruit, a vegetable, or a combination thereof.

12. The food powder composition of claim 10, wherein the fruit puree, vegetable puree, fruit juice, vegetable juice, nectar, or combination thereof comprises ≤ 6% (w/w) endogenous trehalose.

13. The food powder composition of claim 10, consisting essentially of:
the plant-derived product;
25-50% (w/w) of the exogenous trehalose; and
≤ 2% (w/w) water.

## Patentansprüche

1. Ein Verfahren zur Herstellung einer Nahrungsmittelpulverzusammensetzung, die im Wesentlichen aus einem pflanzlichen Produkt besteht, exogene Saccharose und/oder Trehalose, und ≤2% (w/w) Wasser, wobei das Verfahren umfasst:
Bereitstellen mindestens eines pflanzlichen Produkts in Form eines Pürees, eines Safts, eines Nektars oder einer beliebigen Kombination davon;
Zugabe einer Menge von exogener Saccharose und/oder Trehalose zu dem pflanzlichen Produkt, und Mischen des pflanzlichen Produkts und der exogenen Saccharose und/oder Trehalose zur Herstellung einer homogenen Mischung, wobei die Menge an exogener Saccharose und/oder Trehalose ausreicht, um eine getrocknete Zusammensetzung bereitzustellen, die das pflanzliche Produkt und 10 bis 60 Gew.-% der exogene Saccharose und/oder Trehalose umfasst;
Auftragen einer Schicht der Mischung auf einen Träger, der die Mischung durch eine Vielzahl von Heizzonen einer Trocknungsvorrichtung bewegt, wobei die Wärme durch trockene Strahlungswärme in Form von Infrarotenergie unterhalb des Trägers bereitgestellt wird, wodurch die Mischung auf eine Temperatur von 65°C bis 90°C erhitzt wird für einen Zeitraum, der ausreicht, um den Wassergehalt der Mischung zu reduzieren;
Abkühlung der Mischung auf Raumtemperatur über einen Zeitraum von 2 bis 10 Minuten;
wodurch eine getrocknete Zusammensetzung hergestellt wird, die ≤ 2% (w/w) Wasser und mindestens 90% an Nährstoffen umfasst, die vor dem Trocknen in dem pflanzlichen Produkt enthalten sind, und
Zerkleinerung der getrockneten Zusammensetzung zur Herstellung von Partikeln mit einer durchschnittlichen größten Abmessung von ≤ 7 mm.

2. Das Verfahren gemäß Anspruch 1, weiterhin umfassend:
a) Vorerhitzen der Mischung auf eine Temperatur, die ausreicht, um die Saccharose und/oder Trehalose in der Mischung vor dem Erhitzen der Mischung aufzulösen, um den Wassergehalt zu reduzieren, oder
b) auflösen der exogene Saccharose und/oder Trehalose in Wasser vor der Zugabe der exogenen Saccharose und/oder Trehalose zu dem pflanzlichen Produkt.

3. Das Verfahren gemäß Anspruch 1, wobei das pflanzliche Produkt ein Püree umfasst, wobei das Verfahren ferner das Reduzieren einer durchschnittlichen Partikelgröße im Püree auf weniger als 50 µm vor dem Erhitzen der Mischung zur Reduzierung des Wassergehaltes umfasst.

4. Das Verfahren gemäß Anspruch 1, wobei das mindestens eine pflanzliche Produkt ≤ 6% (w/w) endogene Saccharose und/oder Trehalose umfasst.

5. Das Verfahren gemäß Anspruch 1, wobei das Bereitstellen mindestens eines pflanzlichen Produkts das Bereitstellen eines Gemischs umfasst, das mindestens ein pflanzliches Püree und mindestens einen pflanzlichen Saft umfasst.

6. Das Verfahren gemäß Anspruch 1, wobei die trockene Strahlungswärme durch Wärmequellen unterhalb des Trägers bereitgestellt wird, wobei das Verfahren weiterhin umfasst:
das Einstellen der vertikalen Positionen der Wärmequellen und/oder der Temperatur der Wärmequellen um ein vorgegebenes Temperaturprofil für die Mischung und eine vorgegebene Wellenlänge der Strahlungsenergie in jeder Heizzone beizubehalten.

7. Das Verfahren gemäß Anspruch 6, weiter umfassend:
Messen der Temperatur der Mischung;
Bestimmung der Wellenlänge der Strahlungsenergie; und
Einstellung der vertikalen Positionen der Wärmequellen und/oder der Temperatur der Wärmequellen basierend auf der gemessenen Temperatur und der ermittelten Wellenlänge, so dass das vorgegebene Temperaturprofil für die Mischung und eine vorgegebene Wellenlänge der Strahlungsenergie in jeder Heizzone beibehalten wird.

8. Das Verfahren gemäß Anspruch 6 oder 7, wobei die vorbestimmte Wellenlänge der Strahlungsenergie 3 Mikrometer oder 6,2 Mikrometer ist.

9. Das Verfahren gemäß Anspruch 1, wobei die Menge an exogener Saccharose und/oder Trehalose ausreichend ist, um eine getrocknete Zusammensetzung bereitzustellen, die das pflanzliche Produkt und 25 bis 50 Gew.-% der exogene Saccharose und/oder Trehalose umfasst.

10. Eine Nahrungsmittelpulverzusammensetzung, erhalten durch das Verfahren gemäß einem der Ansprüche 1 bis 9, wobei die Lebensmittelpulverzusammensetzung, im Wesentlichen bestehend aus:
(i) 40-90 % (w/w) eines pflanzlichen Produkts, umfassend Feststoffe, die aus einem Fruchtpüree, einem Gemüsepüree, einem Fruchtsaft, einem Gemüsesaft, einem Nektar-Produkt oder einer Kombination daraus;
(ii) 10-60% (w/w) exogene Trehalose, wobei das pflanzliche Produkt und die exogene Trehalose eine Dispersion bilden; und
(iii) ≤2 % (w/w) Wasser, wobei die Lebensmittelpulver mindestens 90% der Nährstoffe in dem pflanzlichen Produkt vor dem Trocknen beibehält, und wobei die Pulverzusammensetzung eine Vielzahl von Partikeln mit einer durchschnittlichen größten Abmessung von ≤7 mm umfasst.

11. Die Nahrungsmittelpulverzusammensetzung gemäß Anspruch 10, wobei das pflanzliche Produkt weiterhin natürliche Farbe und/oder natürliches Aroma umfasst, das von einer Frucht, einem Gemüse oder einer Kombination davon stammt.

12. Die Nahrungsmittelpulverzusammensetzung gemäß Anspruch 10, wobei das Fruchtpüree, das Gemüsepüree, der Fruchtsaft, Gemüsesaft, Nektar oder eine Kombination davon ≤6% (w/w) endogene Trehalose umfasst.

13. Die Nahrungsmittelpulverzusammensetzung gemäß Anspruch 10, im Wesentlichen bestehend aus:
dem pflanzlichen Produkt;
25-50% (w/w) der exogenen Trehalose; und
≤2% (w/w) Wasser.

## Revendications

1. Procédé de fabrication d'une composition de poudre alimentaire consistant essentiellement en un produit d'origine végétale, du saccharose et / ou du tréhalose exogène et ≤ 2 % (p/p) d'eau, le procédé comprenant :
se procurer au moins un produit d'origine végétale sous la forme d'une purée, d'un jus, d'un nectar ou de toute combinaison de ceux-ci ;
ajouter une quantité de saccharose et / ou tréhalose exogène au produit d'origine végétale, et mélanger le produit d'origine végétale et le saccharose et / ou tréhalose exogène pour produire un mélange homogène, la quantité de saccharose et / ou tréhalose exogène étant suffisante pour fournir une composition séchée comprenant le produit d'origine végétale et 10 % à 60 % en poids du saccharose et / ou tréhalose exogène ;
déposer une couche du mélange sur un support qui déplace le mélange à travers une pluralité de zones de chauffage d'un appareil de séchage, la chaleur étant fournie par une chaleur de rayonnement sèche sous la forme d'une énergie infrarouge au-dessous du support, chauffant par là le mélange à une température de 65°C à 90°C pendant une période de temps suffisante pour réduire une teneur en eau du mélange ;
refroidir le mélange à la température ambiante sur une période de temps de 2 à 10 minutes ;
produisant par là une composition séchée comprenant ≤ 2 % (p/p) d'eau et conservant au moins 90 % de nutriments trouvés dans le produit d'origine végétale avant séchage ; et
broyer la composition séchée pour produire des particules ayant une dimension moyenne la plus grande ≤ 7 mm.

2. Procédé selon la revendication 1, comprenant en outre :
a) préchauffer le mélange à une température suffisante pour dissoudre le saccharose et / ou tréhalose dans le mélange avant de chauffer le mélange pour réduire la teneur en eau ; ou
b) dissoudre le saccharose et / ou tréhalose exogène dans l'eau avant d'ajouter le saccharose et / ou tréhalose exogène au produit d'origine végétale.

3. Procédé selon la revendication 1, dans lequel le produit d'origine végétale comprend une purée, le procédé comprenant en outre : réduire une dimension moyenne de particule dans la purée à moins de 50 µm avant de chauffer le mélange pour diminuer la teneur en eau.

4. Procédé selon la revendication 1, dans lequel ledit au moins un produit d'origine végétale comprend ≤ 6 % (p/p) de saccharose et / ou tréhalose endogène.

5. Procédé selon la revendication 1, dans lequel se procurer au moins un produit d'origine végétale comprend : se procurer un mélange comprenant au moins une purée d'origine végétale et au moins un jus d'origine végétale.

6. Procédé selon la revendication 1, dans lequel la chaleur de rayonnement sèche est fournie par des sources de chaleur au-dessous du support, le procédé comprenant en outre :
ajuster les positions verticales des sources de chaleur et / ou la température des sources de chaleur pour maintenir un profil de température prédéterminé pour le mélange et une longueur d'onde prédéterminée d'énergie de rayonnement dans chaque zone de chauffage.

7. Procédé selon la revendication 6, comprenant en outre :
mesurer la température du mélange ;
déterminer la longueur d'onde de l'énergie de rayonnement ; et
ajuster les positions verticales des sources de chaleur et / ou la température des sources de chaleur sur la base de la température mesurée et de la longueur d'onde déterminée afin de maintenir un profil de température prédéterminé pour le mélange et une longueur d'onde prédéterminée d'énergie de rayonnement dans chaque zone de chauffage.

8. Procédé selon la revendication 6 ou la revendication 7, dans lequel la longueur d'onde prédéterminée d'énergie de rayonnement est de 3 microns ou de 6,2 microns.

9. Procédé selon la revendication 1, dans lequel la quantité de saccharose et / ou tréhalose exogène est suffisante pour fournir une composition séchée comprenant le produit d'origine végétale et 25 % à 50 % en poids du saccharose et / ou tréhalose exogène.

10. Composition de poudre alimentaire obtenue par le procédé selon l'une quelconque des revendications 1 à 9, la composition de poudre alimentaire consistant essentiellement en :
(i) 40 - 90 % (p/p) de produit d'origine végétale comprenant des matières solides obtenues à partir d'une purée de fruits, d'une purée de légumes, d'un jus de fruits, d'un jus de légumes, d'un produit dérivé de nectar ou de toute combinaison de ceux-ci ;
(ii) 10 - 60 % (p/p) de tréhalose exogène, le produit d'origine végétale et le tréhalose exogène formant une dispersion ; et
(iii) ≤ 2 % (p/p) d'eau, la composition de poudre alimentaire conservant au moins 90 % de nutriments trouvés dans le produit d'origine végétale avant le séchage, et la composition de poudre comprenant une pluralité de particules ayant un diamètre moyen le plus grand de ≤ 7 mm.

11. Composition de poudre alimentaire selon la revendication 10, dans laquelle le produit d'origine végétale comprend en outre un colorant naturel et / ou un arôme naturel dérivé d'un fruit, d'un légume ou d'une combinaison de ceux-ci.

12. Composition de poudre alimentaire selon la revendication 10, dans laquelle la purée de fruits, la purée de légumes, le jus de fruits, le jus de légumes, le nectar ou une combinaison de ceux-ci comprend ≤ 6 % (p/p) de tréhalose endogène.

13. Composition de poudre alimentaire selon la revendication 10, consistant essentiellement en :
le produit d'origine végétale ;
25 - 50 % (p/p) du tréhalose exogène ; et
≤ 2 % (p/p) d'eau.
